# EUROPEAN PATENT SPECIFICATION

(11) **EP 1 196 040 B1**
(45) Date of publication and mention of the grant of the patent: **14.02.2007**
(21) Application number: 00945509.8
(22) Date of filing: 14.07.2000
(51) Int. Cl.: A22C 29/02, A22C 29/00

(54) **METHODS FOR THE PROCESSING OF HARD-SHELLED CRUSTACEANS**
VERFAHREN FÜR DIE BEARBEITUNG VON KRUSTENTIEREN MIT SCHALEN AUS STEIFEM MATERIAL
PROCEDES DE TRAITEMENT DE CRUSTACES A CARAPACE DURE

(30) Priority: 16.07.1999 CA 2277611; 16.07.1999 CA 2277614; 24.09.1999 CA 2283524; 28.06.2000 CA 2312637
(43) Date of publication of application: 17.04.2002
(73) Proprietor: Gallant, Cyril G., Prince Edward Island C0A 2B0 (CA); Hong, Lily, Charlottetown, Prince Edward Island C1E 1V1 (CA); Ablett, Richard, Charlottetown, Prince Edward Island C1A 7J7 (CA)
(72) Inventor: Gallant, Cyril G., Prince Edward Island C0A 2B0 (CA); Hong, Lily, Charlottetown, Prince Edward Island C1E 1V1 (CA); Ablett, Richard, Charlottetown, Prince Edward Island C1A 7J7 (CA)
(74) Representative: Goulard, Sophie
(86) International application number: PCT/CA2000/000829
(87) International publication number: WO 2001/006870

(56) References cited:
- DE-C- 731 828
- US-A- 3 513 071
- US-A- 3 812 271
- US-A- 4 053 964
- US-A- 4 639 976
- US-A- 5 581 887

## Description

### (i) TECHNICAL FIELD TO WHICH THE INVENTION RELATES

The present invention relates to methods for optimizing the utilization of hard-shelled crustaceans, e.g., lobsters and crabs, through inclusion of under-utilized by-product components. These methods are particularly applicable to the processing of clawed lobsters of the *Homaridae* family, as well as the processing of clawless Spiny lobster and Rock lobster species of temperate and tropical origin, which include species of the genera *Panulirus, Jasus* and *Chelonectes.* The method can also be applied to lobster-like crustaceans, including some types of prawn, *Nephrops norwegicus* and freshwater crayfish species. This method can further be applied to crab, e.g., a decapod crustacean of the suborder *Callinectes Sapidus,* or the "king crab" of the family *Paralithodes camschatica,* as well as to blue crab, rock sand crab, red crab and Dungeness crab. In addition, this method can be applied to hard-to-process Northern Stone Crab (*Lithodes maja*)*,* Porcupine Crab *(Neolithodes grimaldii),* Irish crab *(Cancer pagurus),* Jonah crab *(Cancer borealis)* and Green Crab.

### (ii) BACKGROUND ART

A traditional method for processing and packaging easy-to-process clawed lobsters of the *Homaridae* family consisted of cooking them whole, either by steam exposure or by hot water immersion, cooling the product and sealing them in plastic bags containing brine solution with subsequent freezing to render the lobster embedded in ice. Inherent to this traditional lobster frozen-in-brine product, a substantial degree of visceral staining of the edible meat components within the upper tail region was encountered. This was attributed, in part, to migration and rupture of the visceral hepatopancreatic fraction and intestinal tract contents during the preparative cooking procedure. Also inherent to this product were residual heavy-metal contaminants, which were predominately-located in the visceral fraction and which underwent migration to the edible body meat fraction as a result of cooking procedures. Thereby the relative concentration of residual heavy-metal contaminants was enhanced in the edible meat fractions of the processed product.

Other traditional methods of processing intact lobsters consisted of freezing cooked lobsters, which were wrapped individually in wax paper in a master-box. Another common method involved the removal of the intact tail section of lobsters with subsequent individual quick-freezing, and packaging the tails through alignment into a box. In such products, the raw lobster material either in an intact form, or as tail sections was prone to problems of breakage due to the brittle nature of their shell material. Particularly, such problems were encountered during distribution and transportation procedures.

The extraction of meat from the body of hard-shelled crustaceans in which the meat is very strongly attached to the shell, e.g., crab, crayfish, lobster, and rock shrimp, as opposed to soft-shelled crustaceans, e.g., all shrimp species, other than rock shrimp, has proved to be very difficult, time consuming and expensive. In present day practices, for obtaining the edible portions from such crustaceans e.g., lobster, crab, crayfish, rock shrimp, and the like, involved a variety of mechanical, electrical and heat-treatments which included subjecting the crustaceans to a sawing action on the shells, a high or low electrical voltage through the shells, treatment with direct flame, immersion in boiling water or various chemical treatments, or treatment with steam at atmospheric pressure or under high pressures in closed vessels. A myriad of other procedures were also known which involved combinations of some or all of the foregoing methods. While some of the procedures had various degrees of success, most of the prior known procedures required hand labour to treat the individual fresh crustaceans in order to remove the edible flesh.

Both raw and cooked hard-shell sections of processed lobsters have heretofore been subjected to many treating methods, for example, freezing intact for subsequent transformation by boiling for rendering extraction of flavour, or proteinaceous solubles and non-soluble components for further culinary applications. In addition, the head-shell material of either raw or cooked lobster : was subjected to grinding reduction and mechanical meat removal procedures.

It was virtually impossible to remove raw lobster meat from head shell without grinding the head shell. Consequently, various mechanical methods have been developed to remove either raw or cooked meat from mechanically-reduced head-shell material. In some techniques, physical separation of the meat from the shell was effected through the use of riffle tank particle separation methods. The broken-up shell effectively settled to the bottom, and the extracted meat was concentrated by water fluming and screen collection. A recognized impediment to this procedure was the loss of desirable and delicate flavour components attributed to the extensive washing procedures during separation.

In other traditional procedures, the cooked head-shells of lobster resulting from hand-shucking processing procedures were subjected to mechanical grinding and reduction through use of perforated rotating drum technology. In this method, the edible meat, and visceral components contained within the head-shell component were separated from the shell fraction by the application of variable belt pressure against a perforated stainless steel drum. The size of the apertures in the drum provided for physical separation of the softer meat and visceral components from the hard brittle shell and cartilaginous skeletal material. Such products arising were commonly recognized as "lobster mince" and found use as culinary ingredients within the food industry.

Many of the difficulties in the removal of the crustacean meat stemmed from the physical structure of the hard crustacean shell, the manner in which the meat was adhered to the shell, the need to extract and maintain the meat in a minimum bacteriologically-contaminated manner, as well as the commercial desire to extract the meat in lump form rather than in many small pieces. The research, both by industry and universities, has been extensive and has resulted in various alleged improvements in the meat extraction processes.

Pre-treatment of the crustaceans by chemicals, the use of certain cooking conditions, the use of machines which squeezed the meat out, or which cored and centrifuged the meat out, or in which air or water blasted the meat out, or which froze and exploded the meat out, have been proposed and advanced with varying degrees of success.

Lobster, and limbs and claws thereof, have been efficiently used and formulated into limb-like or stick-like meat products or claw meat products. After removing the carapaces, gonads, branchiae and internals, the trunks were washed with water and ground-up. Then, the meat remaining in the trunks was recovered with a meat separator and was formulated into minced meat. This meat was further washed with water and the fibrous meat was taken therefrom and was formulated into flakes. Thus, various proteineous parts, including meat remaining in the carapace, the glands, branchiae and meat remaining in the trunks were not utilized, but was disposed of as such.

In the current art and industry of producing meat from the crab it is now common practice to prepare the cooked crab body for removal of the meat by processing the body through a machine which removes the claws, flippers, walking legs and carapace, and then brushes and flushes the visceral cavity. Further machine processing of the prepared body could successfully produce marketable regular mat, but could not remove the backfin lump meat which was considered to be the most valuable product of the crab and which, to date, must be removed by hand picking. An improvement to that processing procedure involved preparing the crab for removal of the lump meat after cooking and removing of the carapace. That procedure involved cutting the side mounds of the body along planes which were disposed at equal acute angles to the bottom shell of the crab and converged to meet along the intersection of the bottom shell and the middle bony ridge, and were outside the inner walls of the collar bones. This exposed the two lump meats, after which a hand tool was inserted into each lump cavity on either side of the lump, and was then compressed and withdrawn, bringing the lump meat with it.

There are many patents which are directed to the processing of such shellfish. Non-limiting examples include the following patents:

U.S. Patent No. 2,155,308, patented April 18, 1939, by Sterling G. Harris and assigned to The Blue Channel Corporation; U.S. Patent No. 2,501,655, patented March 28, 1950, by W.M. Altenburg; U.S. Patent No. 2,858,223, patented October 28, 1958, by Sterling G. Harris, and assigned to The Blue Channel Corporation; U.S. Patent No. 2,978,334, patented April 4, 1961, by Lapeyre, and assigned to The Peelers Company; U.S. Patent No. 3,022,175, patented February 20, 1962 by L.A. Wakefield; U.S. Patent No. 3,159,992, patented June 9, 1964, by L.C. Fredrickson; U.S. Patent No. 3,156,949, patented November 17, 1964, by J.P. Moncure; U.S. Patent No. 3,253,299, patented May 31, 1966, by S.G. Harris, assigned to The Blue Channel Corporation; U.S. Patent No. 3,471,894, patented October 14, 1965 by E.W. Tasker, assigned to Cape Ann Marine Research Company Inc.; U.S. Patent No. 3,513,071 patented May 19, 1970, by Gottlieb Bernhard Fehmerling; Japanese Patent No. 46-10898; U.S. Patent No. 3,705,040, patented December 5, 1972, by Peter W. Bynagte, and assigned to Westgate-California Foods, Inc.; U.S. Patent No. 3,773,962, patented November 20, 1973, by Trelease et al, and assigned to A. Swift & Company; U.S. Patent No. 4,053,964, patented October 18, 1977, by J.E. Rutledge; and U.S. Patent No. 4,340,613, patented July 20, 1982, by Michael P. Moore. Other patents taught the production of seafood pastes. Non-limiting examples include the following: U.S. Patent No. 4,588,601 patented May 13, 1986 by T. Moriyama et al and assigned to Kibus Company Limited; U.S. Patent No. 4,816,278, patented March 28 18, 1989 by Sasamoto et al; U.S. Patent NO. 4,820,529, patented April 11, 1989 by Y Uchida et al and assigned to Asaki Danka Kogyo Kabushiki Kaisha; and U.S. Patent No. 5,560,959, issued October 1, 1996 to Gabriel Elbaz.

None of these conventional methods provided a procedure for separating intact crustacean shell from intact whole raw crustacean meat in order to use byproducts and inefficiently-utilized components of crustaceans, and to process hard-to-process crustaceans to provide intact raw crustacean meat while also overcoming the limitations of the prior art.

### (iii) DISCLOSURE OF THE INVENTION

By one first broad embodiment of this invention, a method is provided for removing raw edible crustacean meat from the intact shell of hard-shelled crustacean in which the meat is very strongly adhered to the shell, the method comprising a) initiating the detachment of the raw edible crustacean meat from the intact shell by the step of (i) immersing the intact shell in a solution of protease enzymes; or (ii) subjecting the intact shell to at least one freeze-thaw cycle; or (iii) subjecting the intact shell to at least one freeze-thaw cycle, wherein the thawing is accomplished in cold water, or in a cold dilute solution of brine; or (iv) subjecting the intact shell to the action of a superchilled ice/salt mixture at a maximum low temperature of the eutectic temperature; b) separating the intact shell from the detached raw edible crustacean meat and recovering the raw edible crustacean meat by the step of either: (i) subjecting the so-treated intact shell to vacuum aspiration to remove and recover the raw edible meat; or (ii) manually separating intact shell from intact raw edible crustacean meat, recovering the raw intact crustacean meat and discarding the shell.

By one feature of the method of this first broad embodiment of this invention, the method is used for removing meat from Spiny lobster, and comprises: a) initiating the detachment of an intact shell of the Spiny lobster from intact raw edible Spiny lobster meat by the step of subjecting the Spiny lobster to at least one freeze-thaw cycle, wherein the thawing is accomplished in cold water, or in a cold dilute solution of brine; and b) manually separating intact shell of the Spiny lobster from whole, intact Spiny lobster meat within the shell, recovering the whole, intact Spiny lobster meat, and discarding the shell.

By a second feature of the method of this first broad embodiment of this invention, the method is used for removing meat from crab, and comprises a) initiating the detachment of an intact shell of the crab from intact raw edible meat by the step of subjecting the crab to at least one freeze-thaw cycle wherein the thawing is accomplished with cold water, or with a cold dilute solution of brine; and b) manually separating intact shell of the crab from whole, intact crab meat within the shell, and recovering the whole, intact meat, while discarding the shell.

By a second broad embodiment of this present invention, a method is provided for preparing stuffed, intact, whole, crustacean which comprises: vacuum eviscerating the anterior and posterior sections of the crustacean; back flushing the anterior and posterior sections of the crustacean for the removal of the visceral and intestinal contents of the lobster; and filling the anterior visceral cavity of the crustacean with a stuffing comprising a raw blend comprising female crustacean roe and crustacean meat which has been recovered from a crustacean, or crustaceans according to the method as described herein above, thereby providing stuffed, intact, whole, crustacean.

By a third broad embodiment of this invention, a stuffed, intact, whole, crustacean is provided in which the visceral and intestinal contents of the crustacean have been removed, the crustacean then being filled with a stuffing comprising a raw blend comprising female crustacean roe and crustacean meat which has been recovered from a crustacean.

By a fourth broad embodiment of this invention, a stuffing is provided for a stuffed, intact, whole crustacean in which the visceral and intestinal contents of the crustacean have been removed, the stuffing comprising a raw blend comprising female crustacean roe and crustacean meat which has been removed from a crustacean.

Embodiments of the method of the first broad embodiment of this invention include:
immersing the shell in a protease enzyme solution, and subsequently subjecting it to hot water inactivation of the enzyme;
immersing the raw shell into an aqueous solution of protease enzyme in the concentration of 15 to 55(w/w) under temperature conditions ranging between 15°C and 40°C for a period of between 2 minutes and 8 minutes and in a pH range of 5.0 to 8.0, thereby to provide rapid-release of intact deep-shoulder myotomal meat from cartilaginous skeletal attachments;
the steps of terminating the action of the protease enzyme by immersion of the head-shell in hot water which is held at a temperature of between 80°C and 100°C for a period of between 10 seconds and 75 seconds, and subsequently subjecting the shell to conditions of cold water immersion in a temperature range of between 1°C and 10°C for a period of between 1 minute and 5 minutes;
subjecting the shell to a freezing procedure at a temperature ranging between -10°C and -20°C, followed by thawing of the frozen shell until a temperature of between 4°C and 12°C is reached;
the post-thawing step of exposing the treated shell to conditions of cold water treatment in the temperature range of 1°C to 10°C for a period of between 1 minute to 10 minutes, e.g., for a period between 3 minutes and 8 minutes to effect heat removal from the shell;
accomplishing the thawing step in cold water or in cold brine in a temperature range of 1°C to 10°C for a period of between 1 minute to 10 minutes, e.g., for a period between 3 minutes to 8 minutes;
using sodium chloride as the salt so that the low temperature is +3°C - 3°C.

This method is particularly suitable for the processing of crustaceans which may be *Homaridae* lobster, or Spiny lobster or crab, or *Lithodes maja,* or *Neolithodes grimaldii,* or *Cancer pagurus* or *Cancer borealis.*

Embodiments of the method of one feature of the first broad embodiment of the invention for removing meat from Spiny lobster include:
the step of butchering anaesthetized Spiny lobster by separating its body from its carapace;
accomplishing the anaesthetizing with a dilute aqueous solution of a metabisulphite;
subjecting the carapace to a freezing procedure at a temperature of ranging from -10°C to -20°C, followed by thawing of the carapace until a temperature of 4°C to 12°C is reached;
accomplishing the thawing step in cold water or in cold dilute brine for a period of time of between 1 minute to 10 minutes, e.g., for a period of time of between 3 minutes to 8 minutes;
accomplishing the step of removing the antennae with head shell and meat therein attached to the antennae from the carapace;
accomplishing the steps of recovering intact whole antennae meat by manually breaking the shell and the knuckles of the antennae, manually separating the broken shell from intact antennae meat, and recovering the intact antennae meat carapace while discarding the shell;
subjecting the body to a freezing procedure at a temperature of ranging from -10°C to -20°C, followed by thawing of the body, wherein the thawing is accomplished in cold water, or in a cold dilute solution of brine until a temperature of 4°C to 12°C is reached;
accomplishing the thawing step in cold water or in cold dilute brine for a period of time of between 1 minute to 10 minutes, e.g., for a period of time of between 3 minutes to 8 minutes;
the step of recovering intact, whole head shell meat by separating intact head shell from intact head shell meat, and recovering the intact head shell meat while discarding said shell;
the steps of recovering intact leg meat by the steps of severing the legs from the body at the shoulder, severing the tendon of the legs at the first joint of the legs, grasping the shell of the leg at the extremity of the leg and at the shoulder end of the leg with different hands, pulling the shells apart, thereby exposing the intact leg meat adjacent to the extremity of the leg, and discarding that leg shell, grasping the exposed leg meat and the shell at the shoulder end of the leg with different hands, pulling the leg meat and the leg shell apart, thereby exposing the entire whole intact leg, and discarding the shell, and recovering the entire whole intact leg meat;
the steps of recovering intact shoulder meat by manually breaking the thorax shell at the shoulders of the legs into a plurality of segments, manually separating each broken thorax shoulder shell segment from the intact shoulder shell meat, and discarding the separated shell segments, manually breaking up the thorax shell into a plurality of segments, manually separating the broken-up thorax shell segments from the intact thorax meat and discarding the broken thorax shells, and recovering intact, whole thorax meat; dislocating deep-shoulder myotomal meat from attachment to cartilaginous appendages after claws, legs and dorsal shell plate and visceral contents have been removed from the lobster.

Embodiments of the method of the second feature of this first broad embodiment of the invention for processing crab include :
the step of butchering the crab by removal of the cap;
subjecting the capless crab to a freezing procedure at a temperature of ranging from -10°C to -20°C, followed by thawing of the frozen capless crab until a temperature of 4°C to 12°C is reached;
accomplishing the thawing step in cold water or in cold brine in the temperature range of 1°C to 10°C, e.g., for a period of between 1 minute to 10 minutes for a period of between 3 minutes to 8 minutes;
the steps of recovering intact crab leg meat by severing the legs from the body of said crab at the shoulder, severing the tendon of the legs at the first joint of the legs, grasping the shell of the leg at the extremity of the leg and at the shell of the shoulder end of the leg with different hands, pulling the shells apart, thereby exposing the intact crab leg meat adjacent the extremity of the leg, and discarding that leg shell, grasping the exposed crab leg meat and the shell at the shoulder end of the leg with different hands, pulling the crab leg meat and the leg shell apart, and thereby exposing the entire whole intact crab leg, and discarding the shell; and recovering the entire whole, intact crab leg meat; and
the steps of recovering intact whole thorax shoulder meat by manually breaking the thorax shell at the shoulders of the legs into segments, manually separating each broken thorax shoulder shell segment from the intact shoulder shell meat, and discarding the separated shell segments, manually breaking up the thorax shell into segments, manually separating each broken-up thorax shell segment from the intact thorax meat and discarding the broken thorax shell segments, and recovering intact, whole thorax meat.

The vacuum aspiration of the anterior visceral cavity and the posterior intestinal tract of the lobster or the crab is accompanied by back-flushing with a dilute aqueous solution of lactic acid, thereby to confer a bacteriostatic property to the eviscerated lobster or crab. The lactic acid is used in a concentration range of 5 ml/L to 20 ml/L (w/w).

Embodiments of the method of this second broad embodiment of the invention for preparing stuffed whole lobster include:
the step of freezing the stuffed, intact, whole, lobster;
the step of cooking the stuffed, intact, whole, lobster at 100°C for a sufficient time to achieve internal carapace temperature of at least 75°C followed by subsequent rapid cooling to effect rapid temperature removal, and finally freezing the stuffed, intact, whole, lobster;
the step of cooking the stuffed, intact, whole, lobster by steam-cooking;
the step of cooling of the cooked stuffed, intact, whole, lobster by spray irrigation;
introducing lobster meat into the anterior visceral cavity of a previously eviscerated lobster by oral intubation and subsequent vibration to effect removal of residual air, thereby to achieve effective filling of the anterior visceral cavity effecting integuous contact between the liquid blend and the contour of the inner shell surface and region of abutment of the internal and anterior abdominal facets of the tail meat of the previously-eviscerated lobster;
steam cooking the stuffing until an internal temperature of between 75°C and 85°C is obtained, thereby to confer a mousse-like texture and desirable pink colouration to the stuffing blend;
subsequently cooling the steam-cooked stuffed lobster by spray irrigation to the dorsal surface of the lobster, thereby to effect rapid-cooling to avoid overcooking and thereby to maintain high quality and integrity to the lobster meat and to the stuffing;
accompanying the preliminary vacuum aspiration of the anterior visceral cavity and the posterior intestinal tract by the back-flushing with a dilute aqueous solution of lactic acid, thereby to confer a bacteriostatic property to the eviscerated lobster;
using the lactic acid in a concentration range of 5 to 20 ml/L (w/w); and
providing the stuffing in the form of a mousse-like texture and a desirable pink colouration, by steam-cooking the stuffing within the lobster until an internal temperature of between 75°C and 85°C is obtained.

Embodiments of this second broad embodiment of the method of the invention for preparing stuffed whole crab include:
using, as the crab, *Lithodes maja* or *Neolithodes grimaldii; Cancer pagurus* or *Cancer borealis;*
accomplishing the thawing step in cold water or in cold brine in the temperature range of 1°C to 10°C for a period of between 1 minute to 10 minutes, e.g., for a period of between 3 minutes to 8 minutes;
accomplishing the step of butchering the crab by removal of the cap;
subjecting the capless crab to a freezing procedure at a temperature of ranging from -10°C to -20°C, followed by thawing of the frozen capless crab until a temperature of 4°C to 12°C is reached;
filling the visceral cavity of a crab with a stuffing comprising a raw blend comprising crab roe and crab meat, thereby providing stuffed, intact, whole, crab;
accompanying the vacuum evisceration of the visceral cavity by back-flushing with a dilute aqueous solution of lactic acid, thereby to confer bacteriostatic properties to the eviscerated crab;
using lactic acid in a concentration range of 5 to 20 ml/L (w/w);
the step of freezing the stuffed, intact, whole, crab;
the step of cooking the stuffed, intact, whole, crab at 100°C for a sufficient time to achieve internal carapace temperature of at least 75°C, followed by subsequent rapid cooling to effect rapid temperature removal, and finally freezing the stuffed, intact, whole, crab;
cooking of the stuffed, intact, whole, crab by steam-cooking;
cooling of the cooked stuffed, intact, whole, crab by spray irrigation;
the step of introducing the raw stuffing blend comprising said crab roe and said crab meat into an anterior visceral cavity of previously eviscerated crab is by oral intubation and subsequent vibration to effect removal of residual air, thereby to achieve effective filling of said visceral cavity and effecting integuous contact between said blend and the contour of the inner shell surface and region of abutment of the internal facets of the previously-eviscerated crab;
the step of steam cooking the stuffing within the crab until an internal temperature of between 75°C and 85°C is obtained, thereby to confer a mousse-like texture and desirable pink colouration to said stuffing blend;
subsequently cooling the steam-cooked stuffed crab by spray irrigation to the dorsal surface of said crab, thereby to effect rapid-cooling to avoid overcooking and thereby to maintain high quality and integrity to said crab meat and to said crab stuffing.

Embodiments of the stuffed crustacean of the third broad embodiment of this invention include:
a stuffed whole lobster or crab in the form of frozen stuffed, intact, whole, lobster or crab;
a stuffed whole lobster or crab in the form of initially cooked stuffed, intact, whole, lobster or crab which has been cooked at 100°C for a sufficient time to achieve an internal carapace temperature of at least 75°C;
a stuffed whole lobster or crab in the form of a lobster or crab which has been rapidly-cooled to effect rapid temperature removal, and finally which has been frozen;
a stuffed whole lobster or crab in the form of steam-cooked stuffed, intact, whole, lobster or crab;
a stuffed whole lobster or crab in the form of steam-cooked and spray-irrigated-cooled stuffed, intact, whole, lobster or crab;
a stuffed whole lobster or crab in which the proportions of female lobster roe and the lobster meat, or female crab roe and crab meat, respectively, are in the range of between 10% and 50% by weight of the female lobster roe or female crab roe and correspondingly between 90% and 50% by weight of lobster or crab meat, respectively;
a stuffed whole lobster or crab in which freeze-thaw stability and performance of the cooked blended stuffing is ensured by providing the stuffing as a blend which also contains from 1 % by weight to 10 % by weight of the food grade starch;
a stuffed whole lobster or crab in which effective filling of the anterior visceral cavity is ensured to effect integuous contact between the stuffing and the contour of the inner shell surface and the region of abutment of the internal and anterior abdominal facets of the tail meat of the lobster or crab by having the stuffing introduced into the anterior visceral cavity of a previously-eviscerated lobster or crab by oral intubation and by subsequent vibration to effect removal of said residual air;
a stuffed whole lobster or crab in which the stuffing is in the form of mousse-like texture and desirable pink colouration by having the stuffing steam-cooked until an internal temperature of between 75°C and 85°C is obtained;
a stuffed whole lobster or crab in the form in which overcooking is avoided and thereby in which high quality and integrity to the lobster meat or the crab meat and to the stuffing is maintained by having the steam-cooked stuffed lobster or crab subsequently-cooled by spray irrigation to the dorsal surface of the lobster or crab;
a stuffed whole lobster or crab in the form in which bacteriostatic property has been conferred to the eviscerated lobster or crab by accompanying said vacuum aspiration of the anterior visceral cavity and the posterior intestinal tract by back-flushing with a dilute aqueous solution of lactic acid; and
using lactic acid in a concentration range of 5 to 20 ml/L (w/w).

The lobster to be stuffed may be *Homaridae* lobster, or the lobster may be Spiny lobster. The crab to be stuffed may be *Lithodes maja,* or may be *Neolithodes grimaldii,* or may be *Cancer pagurus,* or may be *Cancer borealis*

Embodiments of the stuffing of this fourth broad embodiment of this invention for a lobster or crab include:
a stuffing mixture comprising female lobster roe or female crab roe which has been manually-removed from gravid female lobster or gravid female crab, respectively, and lobster meat or crab meat, respectively;
a stuffing mixture in which the proportions of female lobster roe or female crab roe and lobster meat or crab meat, respectively, are in the range of between 10% and 50 % by weight of the female lobster roe or the female crab roe, respectively, and correspondingly between 90 % and 50 % by weight of lobster meat or crab meat, respectively,
a stuffing mixture in which from 1% by weight to 10 % by weight of food grade starch is added to the stuffing mixture, in order to ensure freeze-thaw stability and performance of the cooked blended stuffing;
a stuffing mixture which is in the form of a mousse-like texture and a desirable pink colouration, which is provided by steam-cooking the stuffing until an internal temperature of between 75°C and 85°C is obtained.

In accordance with a first generalized embodiment of this invention, a method is provided for preparing an intact stuffed lobster. The method utilizes raw roe from gravid female lobsters which is blended with raw lobster meat, which has been retrieved, preferably from the head-shell of a lobster by a freeze/thaw cycle, preferably followed by a vacuum intubation. In a first step, lobsters, which may be killed by hot water immersion and chilled by cold water immersion, are subjected to evisceration of the anterior visceral cavity by oral insertion of a vacuum aspirator. Accompanying the evisceration procedure, a back-flushing process serves to irrigate and wash the visceral cavity with a weak solution of an organic acid, e.g., lactic acid. In a second step, the posterior intestinal tract is cleaned, by posterior insertion of a vacuum aspirator incorporating a back-flushing procedure as described above. In a third step, the head-shell of freshly killed lobsters, from which the claws, leg parts and dorsal carapace shell material have been removed, are subjected to at least one freeze/thaw cycle to facilitate detachment of raw edible muscle (meat) from deep-shoulder cartilaginous skeletal attachments. Following this procedure, the head-shell material is subjected to immersion in cold water to eliminate excess thermal inputs causing deteriorative changes in the functional properties of the raw meat fraction. From this point, the head-shell material is subjected to vacuum aspiration to remove the raw meat fraction, which is then retained under either chilled or frozen conditions. In a fourth step, roe which has been manually-separated from a freshly-killed gravid female lobster, is blended in certain proportions with deep-shoulder extracted meat, which has been retrieved from the head-shell of a lobster by a freeze/thaw cycle followed by vacuum intubation, to form a creamy liquid. During this step, an edible binder, e.g., starch, may be added to provide freeze-thaw stability and texture to the final product. In a fifth step, the liquid stuffing blend is intubated via the oral orifice into the visceral cavity of previously-eviscerated lobster. A brief mechanical vibration of the lobster is conducted to ensure that the filling procedure is complete and evenly-distributed, and that air in the visceral cavity has been minimized. In a sixth step, the eviscerated raw lobster containing the liquid stuffing blend is either frozen or subjected to steam cooking. Implicit to the steam cooking procedure is the arrangement of the lobster with the ventral surface facing uppermost. In a seventh step, following steam cooking, the stuffed lobster product is subjected to spray irrigation with cold water to eliminate overcooking and to maintain textural and sensory integrity of the product. The product is subsequently frozen. In an eighth step, either raw eviscerated lobster or stuffed raw lobster or stuffed cooked lobster are optionally-subjected to bi-sectional cutting along the longitudinal axis, or may remain as an intact product, and are then packaged, preferably by means of vacuum sealing in a flexible barrier pouch. The raw stuffed product, so prepared, is subsequently thawed and preferably steam-cooked prior to utilization. The cooked stuffed product, so prepared, is subsequently thawed and presented, either as whole lobster, bi-sectional split lobster as two halves, or it can be bi-sectioned at point of presentation. The cooked lobster, so prepared, can be served either cold or be subjected to warming-over, as desired.

In accordance with a second generalized embodiment of this invention, a method is provided for preparing an intact stuffed lobster product. The method utilizes raw roe from gravid female lobsters which is blended with raw deep-shoulder myotomal meat which is extracted by the aid of protease enzyme and vacuum techniques from the deep-shoulder section of uncooked lobsters. In a first step, lobsters, which are killed by hot water immersion and chilled by cold water immersion, are subjected to evisceration of the anterior visceral cavity by oral insertion of a vacuum aspirator. Accompanying the evisceration procedure, a back-flushing process serves to irrigate and wash the visceral cavity with a weak solution of an organic acid. In a second step, the posterior intestinal tract is cleaned, by posterior insertion of a vacuum aspirator incorporating a back-flushing procedure as described above. In a third step, the head-shell of freshly killed lobsters, from which the claws, leg parts and dorsal carapace shell material have been removed, are subjected to immersion in a solution of protease enzymes to facilitate detachment of raw edible muscle (meat) from deep-shoulder cartilaginous skeletal attachments. Following this procedure, the head-shell material is subjected to hot water immersion to terminate further action of the applied protease enzymes, followed by immersion in cold water to eliminate excess thermal inputs causing deteriorative changes in the functional properties of the raw meat fraction. From this point, the head-shell material is subjected to vacuum aspiration to remove the raw meat fraction, which is then retained under either chilled or frozen conditions. In a fourth step, roe which has been manually-separated from the posterior head-shell region of a freshly-killed gravid female lobster, is blended in certain proportions with deep-shoulder extracted meat to form a creamy liquid. During this step, an edible binder, e.g., starch may be added to provide freeze-thaw stability and texture to the final product. In a fifth step, the stuffing blend is intubated via the oral orifice into the visceral cavity of previously-eviscerated lobster. A brief mechanical vibration of the lobster is conducted to ensure that the filling procedure is complete and evenly-distributed, and that air in the visceral cavity has been minimized. In a sixth step, the eviscerated raw lobster containing the stuffing blend is either frozen or subjected to steam cooking. Implicit to the steam cooking procedure is the arrangement of the lobster with the ventral surface facing uppermost. In a seventh step, following steam cooking, the stuffed lobster product is subjected to spray irrigation with cold water to eliminate overcooking and to maintain textural and sensory integrity of the product. The product is subsequently frozen. In an eighth step, either raw eviscerated lobster, stuffed raw lobster and/or stuffed cooked lobster is optionally-subjected to bi-sectional cutting along the longitudinal axis, or is allowed to remain as an intact product, and is then packaged, preferably by means of vacuum sealing in a flexible barrier pouch. The raw stuffed product, so prepared, is subsequently thawed and preferably steam-cooked prior to utilization. The cooked stuffed product, so prepared, is subsequently thawed and presented, either as whole lobster, bi-sectional split lobster as two halves, or it can be bi-sectioned at point of presentation. The cooked product, so prepared, can be served either cold or subjected to warming-over, as desired.

In accordance with yet a third generalized embodiment of this invention, a method is provided for preparing an intact stuffed lobster product, or crab product. The lobster may be *Homaridae* lobster or Spiny lobster; and the crab may be e.g., *Lithodes maja, Neolithodes grimaldii, Callinectes sapidus, Paraluthodes camschactica, Cancer pagurus, Cancer boreali,* blue crab, sand crab, red crab or Dungeness crab. For preparing stuffed intact lobster, the method utilizes raw roe from gravid female lobsters which is blended with raw lobster meat, which has been retrieved from a lobster, and especially from the head-shell of a lobster, by a super chilled procedure. For preparing stuffed intact crab, the method utilizes raw roe from gravid female crab, which is blended with raw crab meat which has been retrieved from a crab, by a superchilled procedure.

In a first step, lobsters or crabs, which may be killed by hot water immersion and chilled by cold water immersion, are subjected to evisceration of the anterior visceral cavity by oral insertion of a vacuum aspirator. Accompanying the evisceration procedure, a back-flushing process serves to irrigate and wash the visceral cavity with a weak solution of an organic acid, e.g., lactic acid..

In a second step, the posterior intestinal tract is cleaned, by posterior insertion of a vacuum aspirator incorporating a back-flushing procedure as described above.

In a third step, the lobster or the crab, and especially the head-shell of freshly killed lobsters, from which the claws, leg parts and dorsal carapace shell material have been removed, are subjected to a superchilled procedure to facilitate the detachment of raw meat from the shell and especially the raw edible muscle (meat) from deep-shoulder cartilaginous skeletal attachments. In this superchilled procedure, an insulated container is charged with a freezing mixture of ice and salt. Amongst the salts which may be used, are those in the following Table. That Table gives the percent of the anhydrous material as shown in the column on the left in the eutectic mixture with ice. The eutectic temperature is the lowest temperature which can be obtained from a mixture of the substance with ice. To obtain the maximum cooling effect, the freezing mixture should be prepared with ice and the other ingredient should be cooled to 0°C.

| Formula of Salt | % (by weight) | Eutectic Temp.(°C) |
|---|---|---|
| BaCl, | 22.5 | -7.8 |
| CaCl₂ | 29.8 | -55 |
| Ca(NO₂)2 | 35 | -16 |
| ClCl₂ | 36 | -40 |
| Cu(NO₂)2 | 36 | -24 |
| CuSO₄ | 11.9 | -1.6 |
| FeCl₃ | 33.1 | -55 |
| FeSO₄ | 13.04 | -1.824 |
| K₂CO₃ | 39.5 | -36.5 |
| KC1 | 19.75 | -11.1 |
| K₂CrO₄ | 36.6 | -11.3 |
| KNO₃ | 10.9 | -2.9 |
| MgCl₂ | 21.6 | -33.6 |
| Mg(NO₃)₂ | 34.6 | -29 |
| MgSO₄ | 19 | -3.9 |
| MnSO₄ | 32.2 | -10.5 |
| NH₄Cl | 18.6 | -15.8 |
| NH₄NO₃ | 41.2 | -17.35 |
| (NH₄)₂SO₄ | 38.3 | -19.05 |
| NaBr | 40.3 | -28 |
| Na₂CO₃ | 5.9 | -2.1 |
| NaCl | 23.3 | -21.13 |
| NaNO₃ | 37 | -18.5 |
| Na₂SO₄ | 12.7 | -3.55 |
| Na₂S₂O₄ | 30 | -11 |
| NiSO₄ | 20.6 | -4.15 |
| SrCl₂ | 26 | -18.7 |
| Sr(NO₂)₂ | 24.5 | -5.75 |
| ZnCl₂ | 51 | -62 |
| Zn(NO₃)₂ | 39.4 | -29 |
| ZnSO₄ | 27.2 | -6.55 |

It is preferred that sodium chloride be used as the salt, in proportions to provide a maximum low temperature of -3°C. The lobster or crab is immersed in an insulated container which is charged with the ice/salt mixture for a suitable period of time, mixture, for a suitable period of time, until the carapace temperature is preferably +3°C to -3°C.

Following this procedure, the lobster is subjected to a treatment to separate the shell from the meat. This treatment may be, as described hereinabove, vacuum aspiration to remove and recover the meat, or manual removal of the shell from large, discrete, intact portions of the meat.

In a fourth step, roe which has been manually-separated from a freshly-killed gravid female lobster or gravid female crab, is blended in certain proportions with the so-obtained lobster meat or the so-obtained crab meat respectively, to form a creamy liquid. During this step, an edible binder, e.g., starch may be added to provide freeze-thaw stability and texture to the final product.

In a fifth step, the liquid stuffing blend is intubated via the oral orifice into the visceral cavity of previously-eviscerated lobster or crab. A brief mechanical vibration of the lobster or crab is conducted to ensure that the filing procedure is complete and evenly-distributed, and that air in the visceral cavity has been minimized.

In a sixth step, the eviscerated raw lobster or eviscerated raw crab or containing the liquid stuffing blend is either frozen or is subjected to steam cooking. Implicit to the steam cooking procedure is the arrangement of the lobster or the crab with the ventral surface facing uppermost.

In a seventh step, following steam cooking, the stuffed lobster or stuffed crab is subjected to spray irrigation with cold water to eliminate overcooking and to maintain textural and sensory integrity of the lobster or crab. The lobster or crab is subsequently frozen.

In an eighth step, either raw eviscerated lobster, or stuffed raw lobster, or stuffed raw crab, stuffed cooked lobster, stuffed cooked crab are optionally-subjected to bi-sectional cutting along the longitudinal axis, or to remain as an intact product, and are then packaged, preferably by means of vacuum sealing in a flexible barrier pouch. The raw stuffed product, so prepared, is subsequently thawed and preferably steam-cooked prior to utilization. The cooked stuffed product, so prepared, is substantially thawed and presented, either as whole lobster or crab, bi-sectional split lobster or crab as two halves, or it can be bi-sectioned at point of presentation. The cooked product, so prepared, can be served either cold or be subjected to warming-over, as desired.

### (iv) ADVANTAGEOUS EFFECTS OF THE INVENTION

Advantageous effect of the present invention include the following:
it provides a novel procedure for processing of crustaceans;
it provides such a procedure which maximizes the use and presentation of formerly-unutilized body parts thereof;
it provides such a procedure which includes a technique which facilitates the loosening and the removal of the edible flesh, e.g., uncooked meat, namely intact, raw meat from crustaceans, i.e., various species of lobster and crab;
it provides such a procedure that has a shorter processing time, is more economical, and that removes the meat in a substantially-whole form;
it provides such a procedure which includes a technique which attacks and at least partially-dissolves or weakens the connective tissue between the shells of crustaceans and the edible flesh;
it provides for the production of a paste-product from lobster roe and lobster meat;
it provides an improved method of preparing a whole, cooked, stuffed and frozen lobster product or crab product; and
it provides a procedure for separating intact shells of such crustaceans, from intact raw meat, that has a shorter processing time, is more economical.

### (v) BRIEF DESCRIPTION OF THE FIGURES IN THE DRAWINGS

In the accompanying drawings,
FIG. 1 is a top view of a whole lobster;
FIG. 2 is a side view, in half-section, of a whole lobster;
FIG. 3 illustrates one embodiment of the invention in which FIG. 3A is a flow chart of the first two out of five preparative steps which are followed to obtain a stuffed lobster product; and FIG. 3B is a flow chart of the last three out of five preparative steps which are followed to obtain the stuffed lobster product.
FIG. 4 illustrates a second embodiment of the invention in which FIG. 4A is a flow chart of the first two out of five preparative steps which are followed to obtain a stuffed lobster product; and FIG. 4B is a flow chart of the last three out of five preparative steps which are followed to obtain the stuffed lobster product.
FIG. 5 is a photograph of a perspective front view of a Spiny lobster showing the carapace, the antennae, and the legs;
FIG. 6 is a flow chart of the steps carried out according to the method of a third embodiment of the invention for the processing of a Spiny lobster, in which FIG. 6A illustrates the steps for the recovery of antennae meat, FIG. 6B illustrates the steps for the recovery of leg meat, and FIG. 6C illustrates the steps for the recovery of thorax meat;
FIG. 7 is a view of a crab of the *Lithodes maja* family, i.e., the Northern Stone crab, in which FIG. 7A is a view of one half including the carapace, legs and claws in dorsal aspect, FIG. 7B is a view of the male abdomen, FIG. 7C is a view of the female abdomen and FIG 7D is an overall view;
FIG. 8 is a view of a crab of the *Neolithodes grimaldii* family, i.e., the Porcupine crab, in which FIG. 8A is a view of one half including the carapace, legs and claws, FIG. 8B is a view of the male abdomen, FIG. 8C is a view of the female abdomen, and FIG. 8D is an overall view;
FIG. 9 is a flow chart of the steps carried out according to a method of a fourth embodiment of this invention for the processing of the crabs which are shown in FIG. 7 and FIG. 8;
FIG. 10 and FIG. 11 constitute a flow chart of the steps carried out according to the method of a fifth embodiment of this invention for the processing of a lobster of the *Homaridae* family, in which FIG. 10 illustrates the first two out of the five preparative steps which are followed to obtain the stuffed lobster product, and FIG. 11 illustrates the last three out of the five preparative steps which are followed to obtain a stuffed lobster product;
FIG. 12, FIG. 13 and FIG. 14 constitute a flow chart of the steps carried out according to the method of a sixth embodiment of the invention for the processing of a Spiny lobster, in which FIG. 12 illustrates the steps for the recovery of antennae meat, FIG. 13 illustrates the steps for the recovery of leg meat, and FIG. 14 illustrates the steps for the recovery of thorax meat; and
FIG. 15 is a flow chart of the steps carried out according to a method of a seventh embodiment of this invention for the processing of crabs, and preferably of *Lithodes maja* or *Neolithodes grimaldii.*

### (vi) DESCRIPTION OF THE PRIOR ART

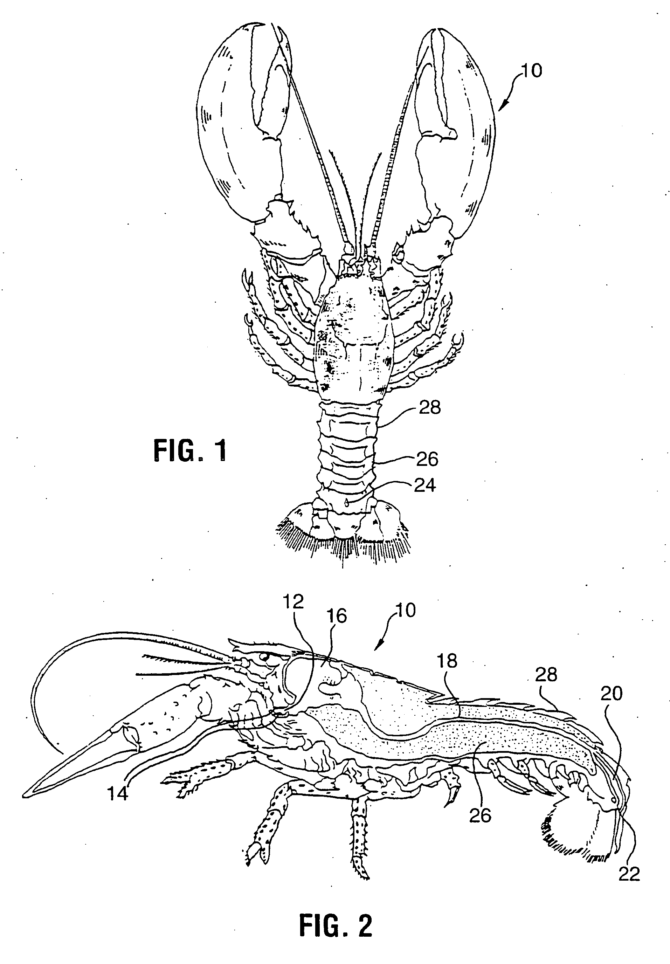

One prior art technique of cleaning-out the internal system of a lobster is by flushing-out with a suitable solution. Referring to FIGS. 1 and 2,, flushing of a lobster 10 can be carried-out by inserting a spray nozzle (not seen) into the mouth 12 of the lobster 10 through mandibles. Sea water or salt water, which is at room temperature or colder, is sprayed through the spray nozzle, under a pressure of from 5 psig to 20 psig. The stomach contents are generally flushed-back-out through the mouth 12, thus cleaning-out the stomach 14. Moreover, the pressurized water is effective to flush-out the undesirable contents of the intestinal track 18 and cloaca 20 through the anus 22. In this manner, the organic and inorganic debris is eliminated from the gastrointestinal system of the lobster.

One previously-described spray nozzle device for carrying-out the flushing step, as taught by the prior art, is a thin hollow tube having a 1/16 inch orifice at the end, and four additional 1/16 inch orifices, spaced at 90° intervals about the side walls of the tube. Flushing is achieved when the spray nozzle is inserted through the mouth 12 and the mandibles 14 of the lobster 10, and is thereafter rotated-about by hand within the lobster 10.

Another technique for removing the contents of the internal organs of the lobster is effective, a preferred technique for cleaning-out the hind-gut of the lobster, as taught by the prior art, involves suction evisceration. This technique comprises making a small slit 24 in the abdomen (lobster tail) 26 in the area of the cloaca 20 of the lobster 10. Although this slit may be made on the top-side or the under-side of the lobster, the slit may be made through the posterior part of the abdominal shell 28 on the top-side of the lobster 10. A vacuum tube (not seen) is then inserted through the slit 24, and is used to suck-out the whole hind-gut comprising the intestinal tract (vein) 18 and cloaca 20. Suction evisceration of the hind-gut is generally always carried-out prior to cooking.

As taught by the prior art, the suction nozzle (not seen) will generally have an inside diameter of 1/4 inch, in order effectively to remove the hind-gut of the lobster 10. Also, the nozzle (not seen) will generally be operated under a vacuum of from 15 inches to 25 inches Hg, and removal of the hind-gut can generally be accomplished in from 3 seconds to 5 seconds.

The stomach 16 of the lobster 10 can subsequently be removed by insertion of the suction nozzle through the mouth 12 between mandibles 14. Suction removal of the stomach 16 and the stomach contents generally requires a longer period of time than the suction-removal of the hind-gut, and usually will require from 5 seconds to 15 seconds.

### (vii) AT LEAST ONE BEST MODE FOR CARRYING OUT THE INVENTION

The method of one embodiment of this invention will now be described with reference to the processing of clawed lobsters of the *Homaridae* family. However, it is desired to emphasize that, with suitable modifications which will be apparent to those skilled in the art, this method can also be applied to the clawless Spiny lobster and Rock lobster species of temperate and tropical origin and including species of the genera Panulirus, Jasus and Chelonectes crab, and to lobster-like crustaceans, including some types of prawn, Nephrops norwegicus and freshwater crayfish species.

The method of one embodiment of this invention will now be described with reference to the processing of clawed lobsters of the Homaridae family. However, it is desired to emphasize that, with suitable modifications which will be apparent to those skilled in the art, this method can also be applied to the clawless Spiny lobster and Rock lobster species of temperate and tropical origin and including species of the genera Panulirus, Jasus and Chelonectes crab, and to lobster-like crustaceans, including some types of prawn, Nephrops norwegicus and freshwater crayfish species.

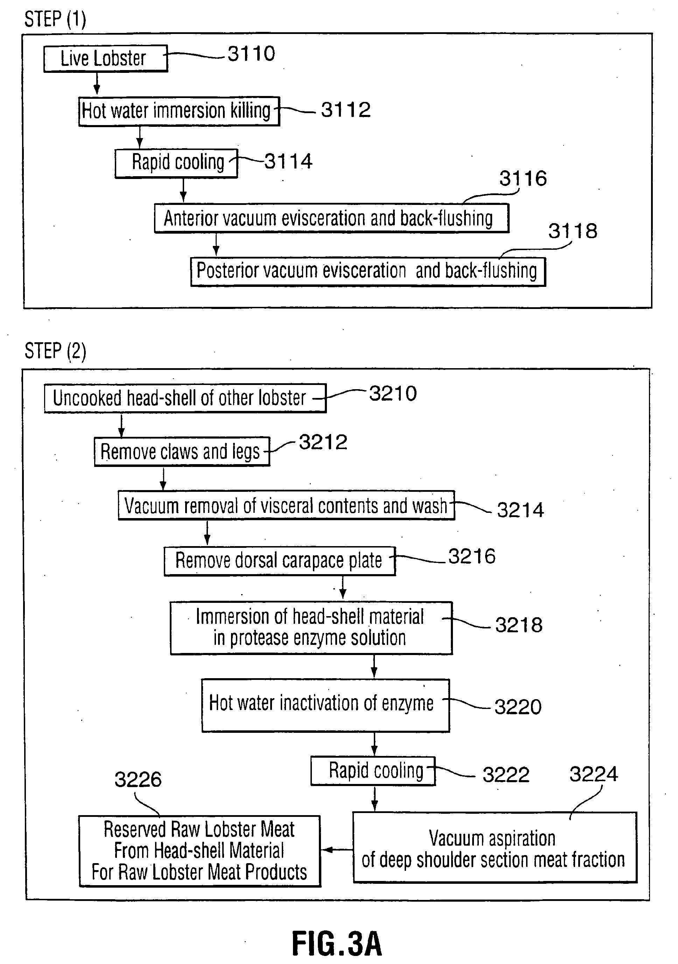

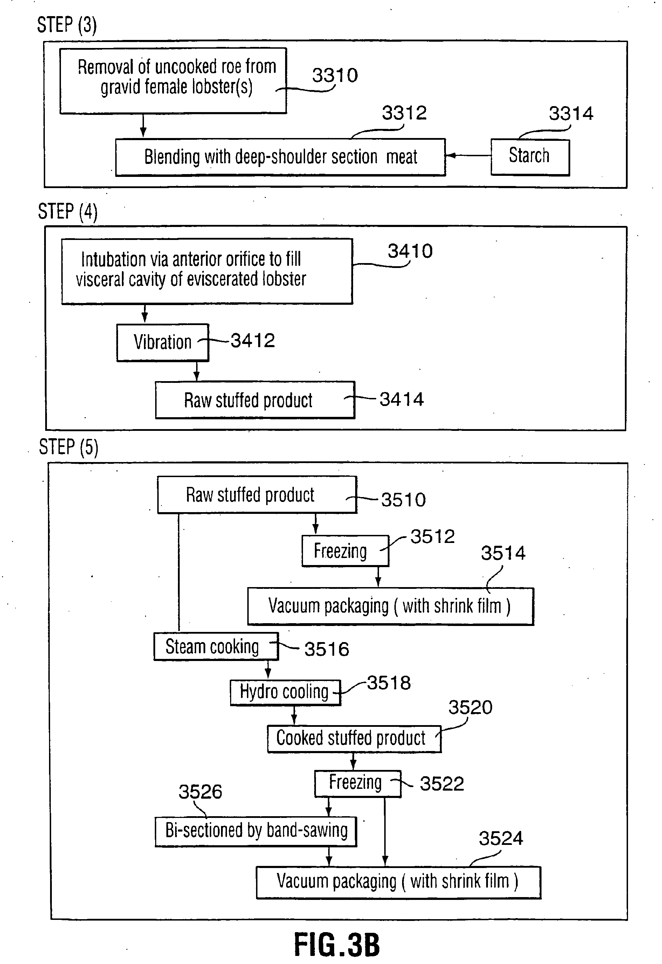

The methods involved in one embodiment of the present invention for preparing a stuffed lobster product is comprised of five steps, respectively referred to as (1), (2), (3), (4) and (5), and are described with reference to FIG. 3A and FIG. 3B.

### Step (1)

The first step, Step (1), of the method of this final embodiment of this invention, involves killing of live lobsters (block 3110) by hot-water blanch immersion (block 3112), in conditions ranging between 50°C and 95°C, for a duration of between 40 seconds to 80 seconds, with immediate transfer to cold water conditions (block 3114) ranging between 0°C to 10°C for a duration of between 2 minutes to 10 minutes. Lobsters, so-treated, are then subjected to vacuum evisceration of the anterior visceral region (block 3116), e.g., as described above, using a vacuum aspirator nozzle of between 10 cm to 16 cm in length with a diameter of between 5mm to 10mm inserted into the oral cavity. Concurrently with this procedure, a back-flushing pipe attached to the vacuum nozzle supplies a dilute solution of lactic acid in a concentration range of 5mg/L to 20mg/L (w/w) as a bacteriostatic agent. The vacuum is applied in the range of 15 inches to 25 inches of Hg and the visceral contents are removed in a period of time ranging between 5 seconds to 15 seconds. Following this procedure, a second vacuum aspirating nozzle with a length ranging between 5cm to 15cm and a diameter of between 1mm to 5mm is inserted into the anal orifice, to effect vacuum cleaning, and concurrently back-flush irrigation (block 3118) with a dilute solution of lactic acid in a concentration range of 5mg/L to 20mg/L (w/w) as a bacteriostatic agent. The latter procedure is preferably accomplished within a period of between 5 seconds and 20 seconds. In a preferred embodiment, the above eviscerated and back-flushed lobster product is maintained in either a fresh or frozen-thawed condition prior to inclusion of the stuffing-blend material.

### Step (2)

In the second step, Step (2) of the method of this first embodiment of the invention, raw head-shell sections of lobsters (block 3210), generally-derived from lobsters which have been subjected to raw-tail-severance procedures, are then subjected to vacuum removal of visceral contents and washing, as previously-described (block 3214). Then the lobster is prepared by manual removal of legs and claws (block 3212), prior to the manual removal of the dorsal carapace plate (block 3216), which reveals the remaining head-shell section containing the edible meat fractions which are intimately-connected and associated with the cartilaginous exoskeleton. Particularly, the deep-shoulder sections yielding up to 5% of edible meat fraction from the lobster are the focus of this second step. Head-shell carapace material, so-prepared, is subjected to immersion in a food-grade protease enzyme solution (block 3215), under temperature conditions ranging between 15°C to 45°C for a period ranging between 2 minutes to 8 minutes. The protease enzyme solution provides a concentration ranging between 1 % to 5 % (w/w) and maintained within a pH range of 5.0 to 8.0.

As taught by the prior art, this treatment with a protease enzyme may, alternatively, be effected using a synergistic combination of proteolytic enzymes with diastatic enzymes.

The synergistic combination of proteolytic enzymes with diastatic enzymes could be particularly-effective when used with crustacea, e.g., lobster, which have a shell which is composed of substantial amounts of chitin. The diastatic enzymes readily hydrolyse the chitin, so as substantially to loosen the edible portion of the lobster. At the same time, the effect of the proteolytic enzymes upon the protein of the shell of the lobster is enhanced, to effect a complete breakdown of the shell and thus, to expose the edible flesh.

An optional third type of enzyme, e.g., cellulose enzymes, may also be used to convert the material in the shell and connecting tissue in the crustacea, e.g., lobsters into lower molecular weight saccharides. The cellulose enzymes are particularly-effective upon the chitin, and soften and partially-dissolve the chitin more rapidly and more completely, than the use of the proteolytic and diastatic enzymes in combination.

Proteolytic enzymes, which may be used, include those that may be of plant, animal or micro-organism sources. Examples of those useful proteolytic enzymes are papain, ficin, and bromelin which find their source in plants. Other proteolytic enzymes which are obtainable from animals include the enzymes e.g., trypsin, chymotrypsin and pancreatin. Other enzymes obtainable from moulds include e.g., *Aspergillus wentii* and *Aspergillus oryzae.* Bacterially-derived enzymes obtained from culturing-bacteria organisms, e.g., *Bacillus mesenteroides, Bacterium subtilis* and *Clostridium welchii.* The amount of proteolytic enzymes to be used in the aqueous bath ranges from 60 % to 96 % by weight of all enzymes in the solution.

Examples of proteolytic enzymes are proteinases e.g., acrosin, urokinase, uropepsin, elastase, enteropeptidase, cathepsin, kallikrein, kininase 2, chymotrypsin, chymopapain, collagenase, streptokinase, subtilisin, thermolysin, trypsin, thrombin, papain, pancreatin peptidase, ficin, plasmin, renin peptidase and rennin, aminopeptidases, e.g., carnosinase and prolinase, peptidases e.g., pronase, and other proteolytic enzymes, as well as, denatured products and compositions thereof.

Examples of proteolytic microorganisms are moulds belonging to the genera *Aspergillus, Mucor, Rhizopus, Penicillium* and *Monascus,* lactic acid bacteria belonging to the genera *Streptococcus, Pediococcus, Leuconostoc* and *Lactobacillus,* bacteria e.g., *Bacillus natto* and *Bacillus subtilis,* and yeasts e.g., *Saccharomyces ellipsuideus, Saccharomyces cerevisiae* and *Torulla,* as well as, mutants and compositions thereof.

Diastatic enzymes are useful to convert polysaccharides e.g., chitin or starch, into less complex compounds, e.g., dextrin, dextrose or maltose. Typical of such diastatic enzymes are both alpha and beta amylose and amylo-glucoside. The diastatic enzymes should be present in the bath in the amount varying between 4 % to 40 % by weight of all enzymes present.

The cellulose enzymes converting cellulose and cellulose derivatives to lower molecular saccharides are present in seeds, bacteria and moulds. The cellulose enzymes, though optional, may be present in an amount of between 1 % and 20 % by weight of the total enzymes present.

To form a treating bath, the mixture of enzymes is dissolved in water in an amount to produce a concentration of enzymes of between .01 % to 5 % .

The bath, for immersing the crustaceans, e.g., lobsters, generally should be at a temperature above 32°C, and may be at a temperature as high as 80°C. Usually, 57°C, is the preferred maximum. The time for immersion may vary, and like the temperature, the time is not critical, but, generally, may range from between 45 minutes and 300 minutes, while between 45 minutes to 200 minutes is preferable. The pH of the enzymatic treating bath is also not critical, and may range from between 2.8 to 8.5 pH, which may be maintained, if necessary, by conventional acids, e.g., citric or alkalis and/or by the use of salts which produce a buffering action, e.g., sodium bicarbonate.

The crustaceans may then be deposited into a container, which is preferably constructed of a non-reactive material, e.g., stainless steel, which has provision for enclosing the contents. The crustaceans are covered with the aqueous solution of the enzymes, which may be circulated through the seafood, in an amount that may vary between equal parts of the treating solution per part of the edible final product up to 20 or more parts, by weight solution per part edible product. Any amount greater than 20:1 is not warranted, for economic reasons.

After the enzymes have been in contact with the crustaceans, e.g., lobsters, crabs, etc., for a time of between 45 minutes to 200 minutes, at a temperature above 32°C to below 80°C, it will be found that, the bone is weakened and partially-dissolved along with the thin layer of connective tissues between the shell and the adductor muscles. While it is not desired to be bound by any particular theory, it is believed that the proteolytic enzymes are active, for instance, in hydrolysing the collagen present in these connective tissues, substantially to loosen the edible portion of the lobster, so that it may be subsequently-removed from the shell.

Following immersion of the head-shell material in the protein enzyme solution, the material is drained and transferred to hot water immersion conditions (block 3220),
at a temperature ranging from between 80°C and 100°C for a period of between 10 seconds and 75 seconds, to render residual enzyme activity terminated, and, thereby, maintain the integrity of the raw muscle tissue. Under such conditions, the muscle tissue is sufficiently-loosened from the skeletal attachments, so as to be favourably-removed by subsequent vacuum aspiration procedures. After hot-water immersion, the head-shell material is immediately-transferred to cold water conditions for rapid-cooling (block 3222), at a temperature range of between 1°C and 10°C for a period of time between 3 minutes and 8 minutes. This procedure provides for rapid cooling of the material and maintenance of the quality attributes of the meat components. The loosened meat is then removed from the deep-shoulder compartments by vacuum aspiration (block 3224), utilizing a vacuum nozzle of between 10cm to 16cm length and a diameter of between 5mm and 10mm. Meat so-removed, is collected in pan-traps which are associated with the vacuum line, providing a vacuum between 15 inches to 25 inches of Hg. In this first embodiment, vacuum extraction of between 1kg to 2kg per person/hour of raw meat material can be obtained. The meat so-extracted can either be held chilled, or frozen prior to further use, for the stuffing recipe to be described in Step (3), hereinafter, or it may be reserved for other applications in other conventional raw lobster meat products and recipes (block 3226).

### Step (3)

In the third step, Step (3), of the method of this aspect of this invention, raw roe is removed from gravid female lobsters (block 3310), and the lobster is often subjected to traditional raw-tail severance processing methods. The roe is manually-extracted and subjected, either to chilling, or freezing under vacuum conditions. If frozen, the roe must be thawed prior to blending with the deep-shoulder myotomal meat which has been extracted according to procedures described in the above Step (2). The roe and the white meat fractions are blended together (block 3312) in a proportion ranging from between 10% to 50% for the roe, and correspondingly 90% to 50% for the deep-shoulder myotomal meat extract. The blending procedure is preferably achieved by use of a food processor, e.g., the one sold by Mari-tech Ltd. (Canada) until a creamy liquid consistency is achieved. During such processing, from 900g to 990g per kilogram of blend, and, e.g., from 10g to 100g of an edible starch, e.g., the one sold by Nacan Products Limited (USA), is added to the blend (block 3314), to ensure its freeze-thaw stability. The lobster roe and deep-shoulder myotomal meat blend (block 3310) is mixed with the starch (block 3314). The lobster roe and deep-shoulder myotomal meat blend (block 3310) to the starch (block 3314) weight ratio may vary from between 5:5 to 9:1; a desirable range may be from 6:4 to 8:2.

The paste of lobster roe and deep-shoulder myotomal meat blend and starch mixture (block 3312) may be mixed under reduced pressure. Ordinarily, the mixing under reduced pressure may be accomplished by agitating in an agitator that can be sealed hermetically, and can provide inside an environment of reduced pressure. The degree of reduced pressure is e.g., 0mm to 260mm Hg. According to this first embodiment of the present invention, the mixture may be agitated rapidly at a reduced pressure near vacuum. The mixing may be successfully-accomplished under such reduced pressure, at 260mm of Hg pressure or less.

Examples of suitable agitators include a mixer, kneader, cutter, and so on which permit adequate agitation, e.g., one where all, mixer, etc., can be utilized at one time. For example, an agitator which may be used is one that is provided with a moving vane inside thereof, which rotates at the rate of 40rpm. The agitator may be provided with a cover in the upper part to be sealed hermetically, and is connected with a decompression device via a hose to keep the pressure of 0mm to 260mm Hg inside the agitator. At this point, the liquid-blend can either be frozen, preferably under vacuum, or intubated into eviscerated lobsters in the chilled form.

### Step (4)

In the fourth step, Step (4) of the method of this first embodiment of this invention, the raw blend material prepared from raw roe and deep-shoulder myotomal meat components, as described above, are introduced into the eviscerated and back-flushed visceral cavity of the lobster, via oral intubation (block 3410). In this procedure, a metering pump can be utilized, e.g., the one sold by Mari-tech Ltd. (Canada). Dependent upon the size range of the lobster, the amount of blend introduced in the oral cavity will vary. By way of example, the principles of this first embodiment of this invention can be applied to lobsters of varying size range, and most commonly weigh between 250g and 1.5kg. Such amounts required to fill the visceral cavity of lobsters amount to between 10% and 15% of the final weight of the lobster. Following metered filling of the visceral cavity, the lobster is subjected briefly to mechanical vibration (block 3412), wherein the filled lobster is maintained in a vertical position, with the oral cavity facing uppermost and subjected to a gentle vibrating force. In this procedure, any residual air pockets entrained within the visceral cavity are voided and a complete fill of the cavity is ensured. The final product of this step is a raw stuffed lobster product (block 3414).

### Step (5)

In the final fifth step, Step (5), of the method of this aspect of the invention, the raw stuffed lobster product (block 3510) can either be frozen as is, for subsequent thawing and cooking (block 3512), and then vacuum-packed with shrunk-film (block 3514), or it can be subject to immediate cooking in atmospheric steam conditions (block 3516) of 100°C. Advantageously, very good results have been obtained by placing the raw stuffed lobster ventral side uppermost into a process dedicated steam chamber, e.g., the one sold for this purpose by Atlantic Systems Manufacturing Ltd. (Canada), with sufficient duration to achieve an internal temperature in the centre point of the stuffing blend of within the visceral cavity of between 70°C to 85°C. This procedure is generally-achieved in a time-frame of between 15 minutes to 20 minutes, and serves approximately to cook the lobster and stuffed contents while still maintaining the integral tail, leg and claw meat sections in an optimal condition. Immediately following attainment of the desired internal temperature, of between 75 °C to 85°C, and to avoid post-cook drying of the delicate meat and stuffing blend, it has been proven necessary to cool the cooked product rapidly.

The optimal method of cooling the cooked lobster product has been to subject the cooked lobster to hydro-cooling by cold water spray irrigation (block 3518), directed as a drench to the dorsal surface of lobsters positioned with the dorsal surface uppermost. Most efficient results have been obtained through the use of a process-dedicated hydro-cooling device, e.g., the one sold by Atlantic Systems Manufacturing Ltd. (Canada). In such application, optimal results can be obtained through the use of either potable fresh water or sea water, in the temperature range of between 1°C and 9°C, for a cooling period of between 5 minutes and 10 minutes, then effecting acceptable heat-reduction from within the centre of the lobster to between 20°C to 30°C. Other procedures involving immersion in ice-water mixes or ice *per se* can be utilized, but these procedures do not lend themselves to industrial applications.

As a part of this final step, either raw stuffed lobster is subjected to freezing (block 3512), or steam-cooked and cooled stuffed lobster is subjected to freezing conditions (block 3522). In either case, the frozen lobster is then packaged in vacuum-sealable pouches under deep vacuum, in the range of 25 inches to 30 inches of Hg (block 3514 or block 3524). Optionally, prior to packaging, frozen stuffed and cooked lobster can be bi-sectioned (block 3526), along the longitudinal axis by band-sawing and reconfigured as an intact product prior to vacuum packaging. In terms of the packaging material, optimum shelf-life results are obtained through use of a heavy-duty shrinkable film laminate, e.g., the material sold by Cryovac (Canada). Moreover, the subsequent film-shrinking by heat exposure serves to minimize potential for breakage of appendages and body parts of the lobster, which is a recognized problem due to the brittle shell characteristics of the lobster.

With the above-described preparative methods of this first embodiment of this invention, and with the equipment specifically-designed to support the procedures, up to 400 units per hour of finished lobster products can be processed, which is commercially interesting and appealing. The reserved raw deep-shoulder myotomal meat retrieved from the head-shell in Step (2) can be used for a variety of other lobster products.

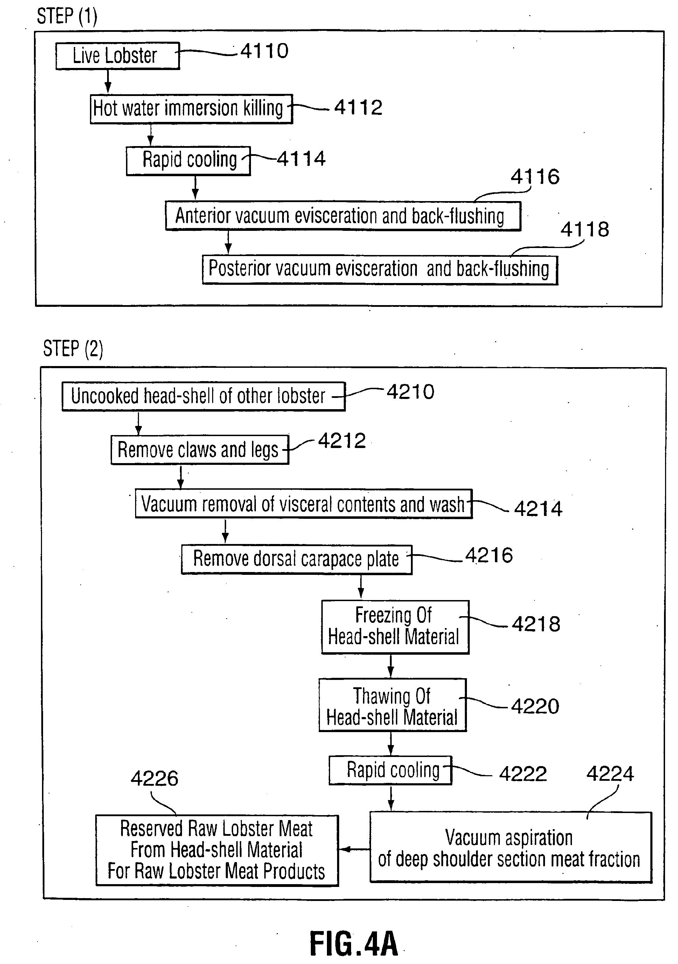

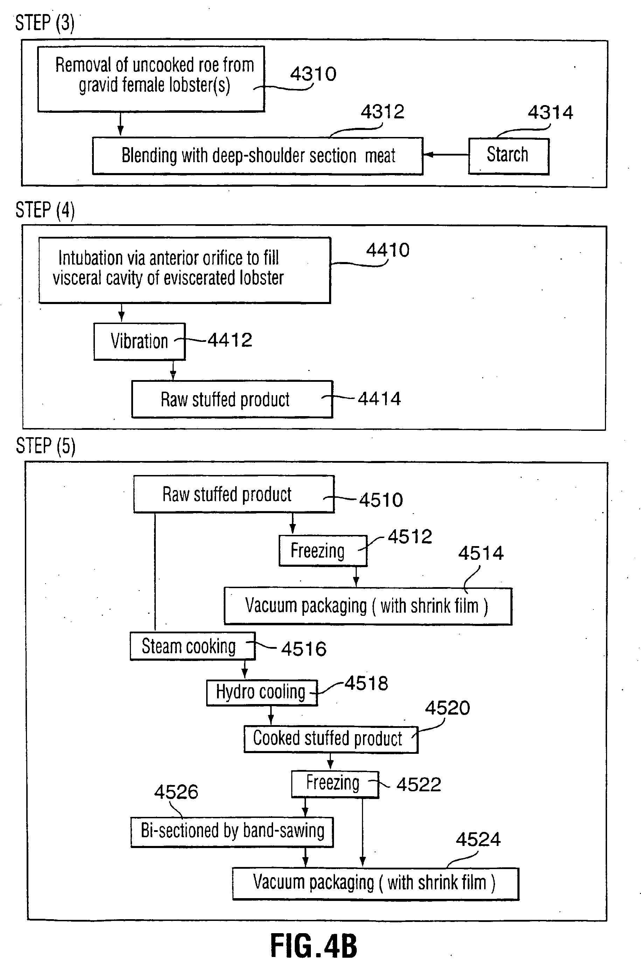

The methods involved in a second embodiment of the present invention for preparing a stuffed lobster is comprised of five steps, respectively referred to as (1), (2), (3), (4), and (5), and will now be described with reference to FIG. 4A and FIG 4B.

### Step (1)

The first step, Step (1), of the method of the second embodiment of this invention, involves killing of live lobsters (block 4110) by hot-water blanch immersion (block 4112), in conditions ranging between 50°C and 95°C, for a duration of between 40 seconds to 80 seconds, with immediate transfer to cold water conditions (block 4114) ranging between 0°C to 10°C for a duration of between 2 minutes to 10 minutes. Lobsters, so-treated, are then subjected to vacuum evisceration of the anterior visceral region (block 4116), e.g., as described above, using a vacuum aspirator nozzle of between 10 cm to 16 cm in length with a diameter of between 5mm to 10mm inserted into the oral cavity. Concurrently with this procedure, a back-flushing pipe attached to the vacuum nozzle supplies a dilute solution of lactic acid in a concentration range of 5mg/L to 20mg/L (w/w) as a bacteriostatic agent. The vacuum is applied in the range of 15 inches to 25 inches of Hg and the visceral contents are removed in a period of time ranging between 5 seconds to 15 seconds. Following this procedure, a second vacuum aspirating nozzle with a length ranging between 5cm to 15cm and a diameter of between 1mm to 5mm is inserted into the anal orifice, to effect vacuum cleaning, and concurrently back-flush irrigation (block 4118) with a dilute solution of lactic acid in a concentration range of 5mg/L to 20mg/L (w/w) as a bacteriostatic agent. The latter procedure is preferably accomplished within a period of between 5 seconds and 20 seconds. In a preferred embodiment, the above eviscerated and back-flushed lobster product is maintained in either a fresh or frozen-thawed condition prior to inclusion of the stuffing-blend material.

### Step (2)

In the second step, Step (2) of the method of this second embodiment of the invention, raw head-shell sections of lobsters (block 4210), generally-derived from lobsters which have been subjected to raw-tail-severance procedures, are then subjected to vacuum removal of visceral contents and washing, as previously-described (block 4214). Then the lobster is prepared by manual removal of legs and claws (block 4212), prior to the manual removal of the dorsal carapace plate (block 4216), which reveals the remaining head-shell section containing the edible deep-shoulder myotomal meat fractions which are intimately-connected and associated with the cartilaginous exoskeleton. Particularly, the deep-shoulder sections yielding up to 5 % of edible deep-shoulder myotomal meat fraction from the lobster are the focus of this second step. Head-shell carapace material, so-prepared, is subjected to at least one cycle of freezing (block 4218) and thawing (block 4220), which facilitates the subsequent vacuum aspiration of the lobster meat from the deep-shoulder fraction.

Following the thawing procedure, the head-shell material is immediately transferred to cold water conditions for rapid cooling (block 4222); at a temperature range of between 1°C and 10°C for a period of time between 3 minutes and 8 minutes. This procedure provides for rapid cooling of the material and maintenance of the quality attributes of the deep-shoulder myotomal meat components. The loosened deep-shoulder myotomal meat is then removed from the deep-shoulder compartments by vacuum aspiration (block 4224), utilizing a vacuum nozzle of between 10cm to 16cm length and a diameter of between 5mm and 10mm. Deep-shoulder myotomal meat so-removed, is collected in pan-traps which are associated with the vacuum line, providing a vacuum between 15 inches to 25 inches of Hg. In this second embodiment, vacuum extraction of between 1kg to 2kg per person/hour of raw deep-shoulder myotomal meat can be obtained. The deep-shoulder myotomal meat so-extracted can either be held chilled, or frozen prior to further use, for the stuffing recipe to be described in Step (3), hereinafter, or it may be reserved for other applications in other conventional raw lobster meat products and recipes (block 4226).

### Step (3)

In the third step, Step (3), of the method of the second embodiment of this invention, raw roe is removed from gravid female lobsters (block 4310), and the lobster is often subjected to traditional raw-tail severance processing methods. The roe is manually-extracted and subjected, either to chilling, or freezing under vacuum conditions. If frozen, the roe must be thawed prior to blending with the deep-shoulder section meat which has been extracted according to procedures described in the above Step (2). The roe and the deep-shoulder myotomal meat fractions are blended together (block 4312) in a proportion ranging from between 10% to 50% for the roe, and correspondingly 90% to 50% for the deep-shoulder myotomal meat extract. The blending procedure is preferably achieved by use of a food processor, e.g., the one sold by Mari-tech Ltd. (Canada) until a creamy liquid consistency is achieved. During such processing, from 900g to 990g per kilogram of blend, and e.g., from 10g to 100g of an edible starch, e.g., the one sold by Nacan Products Limited (USA), is added to the blend (block 4314), to ensure its freeze-thaw stability. The lobster roe and deep-shoulder myotomal meat blend (block 4310) is mixed with the starch (block 4314). The lobster roe and deep-shoulder myotomal meat blend (block 4310) to the starch (block 4314) weight ratio may vary from between 5:5 to 9:1; a desirable range may be from 6:4 to 8:2.

The paste of lobster roe and deep-shoulder myotomal meat blend and starch mixture (block 4312) may be mixed under reduced pressure. Ordinarily, the mixing under reduced pressure may be accomplished by agitating in an agitator that can be sealed hermetically, and can provide inside an environment of reduced pressure. The degree of reduced pressure is e.g., 0mm to 260mm Hg. According to this second embodiment of the present invention, the mixture may be agitated rapidly at a reduced pressure near vacuum. The mixing may be successfully-accomplished under such reduced pressure, at 260mm of Hg pressure or less.

Examples of suitable agitators include a mixer, kneader, cutter, and so on which permit adequate agitation, e.g., one where all, mixer, etc., can be utilized at one time. For example, an agitator which may be used is one that is provided with a moving vane inside thereof, which rotates at the rate of 40rpm. The agitator may be provided with a cover in the upper part to be sealed hermetically, and is connected with a decompression device via a hose to keep the pressure of 0mm to 260mm Hg inside the agitator. At this point, the liquid-blend can either be frozen, preferably under vacuum, or intubated into eviscerated lobsters in the chilled form.

### Step (4)

In the fourth step, Step (4) of this second embodiment of this invention, the raw blend material prepared from raw roe and deep-shoulder myotomal meat components, as described above, are introduced into the eviscerated and back-flushed visceral cavity of the lobster, via oral intubation (block 4410). In this procedure, a metering pump can be utilized, e.g., the one sold by Mari-tech Ltd. (Canada). Dependent upon the size range of the lobster, the amount of blend introduced in the oral cavity will vary. By way of example, the principles of this second embodiment of this invention can be applied to lobsters of varying size range, and most commonly weigh between 250g and 1.5kg. Such amounts required to fill the visceral cavity of lobsters amount to between 10 % and 15 % of the final weight of the lobster. Following metered filling of the visceral cavity, the lobster is subjected briefly to mechanical vibration (block 4412), wherein the filled lobster is maintained in a vertical position, with the oral cavity facing uppermost and subjected to a gentle vibrating force. In this procedure, any residual air pockets entrained within the visceral cavity are voided and a complete fill of the cavity is ensured. The final product of this step is a raw stuffed lobster product (block 4414).

### Step (5)

In the final fifth step, Step (5), of the method of the second embodiment of this invention, the raw stuffed lobster product (block 4510) can either be frozen as is, for subsequent thawing and cooking (block 4512), and then vacuum-packed with shrunk-film (block 4514), or it can be subject to immediate cooking in atmospheric steam conditions (block 4516) of 100°C. Advantageously, very good results have been obtained by placing the raw stuffed lobster ventral side uppermost into a process dedicated steam chamber, e.g., the one sold for this purpose by Atlantic Systems Manufacturing Ltd. (Canada), with sufficient duration to achieve an internal temperature in the centre point of the stuffing blend of within the visceral cavity of between 70°C to 85°C. This procedure is generally-achieved in a time-frame of between 15 minutes to 20 minutes, and serves approximately to cook the lobster and stuffed contents while still maintaining the integral tail, leg and claw meat sections in an optimal condition. Immediately following attainment of the desired internal temperature, of between 75°C to 85°C, and to avoid post-cook drying of the delicate meat and stuffing blend, it has been proven necessary to cool the cooked product rapidly.

The optimal method of cooling the cooked lobster product has been to subject the cooked lobster to hydro-cooling by cold water spray irrigation (block 4518), directed as a drench to the dorsal surface of lobsters positioned with the dorsal surface uppermost. Most efficient results have been obtained through the use of a process-dedicated hydro-cooling device, e.g., the one sold by Atlantic Systems Manufacturing Ltd. (Canada). In such application, optimal results can be obtained through the use of either potable fresh water or sea water, in the temperature range of between 1°C and 9°C, for a cooling period of between 5 minutes and 10 minutes, then effecting acceptable heat-reduction from within the centre of the lobster to between 20°C to 30°C. Other procedures involving immersion in ice-water mixes or ice *per se* can be utilized, but these procedures do not lend themselves to industrial applications.

As a part of this final step, either raw stuffed lobster is subjected to freezing (block 4512), or steam-cooked and cooled stuffed lobster is subjected to freezing conditions (block 4522). In either case, the frozen lobster is then packaged in vacuum-sealable pouches under deep vacuum, in the range of 25 inches to 30 inches of Hg (block 4514 or block 4524). Optionally, prior to packaging, frozen stuffed and cooked lobster can be bi-sectioned (block 4526), along the longitudinal axis by band-sawing and reconfigured as an intact product prior to vacuum packaging. In terms of the packaging material, optimum shelf-life results are obtained through use of a heavy-duty shrinkable film laminate, e.g., the material sold by Cryovac (Canada). Moreover, the subsequent film-shrinking by heat exposure serves to minimize potential for breakage of appendages and body parts of the lobster, which is a recognized problem due to the brittle shell characteristics of the lobster.

With the above-described preparative methods of this second embodiment of this invention, and with the equipment specifically-designed to support the procedures, up to 400 units per hour of finished lobster products can be processed, which is commercially interesting and appealing.

This method can also be applied to the Rock lobster species of temperate and tropical origin and including species of the genera *Panulirus, Jasus* and *Chelonectes* crab, and to lobster-like crustaceans, including some types of prawn, *Nephrops norwegicus* and freshwater crayfish species.

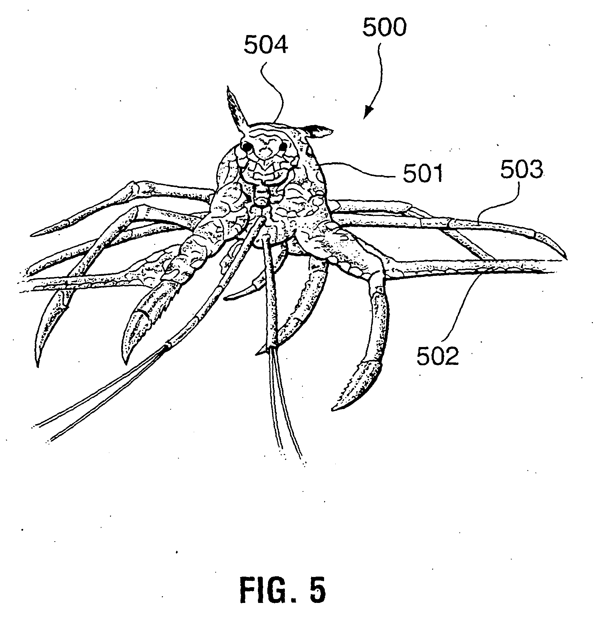

The method applied to Spiny lobster will be described hereinafter with reference to FIG. 5.

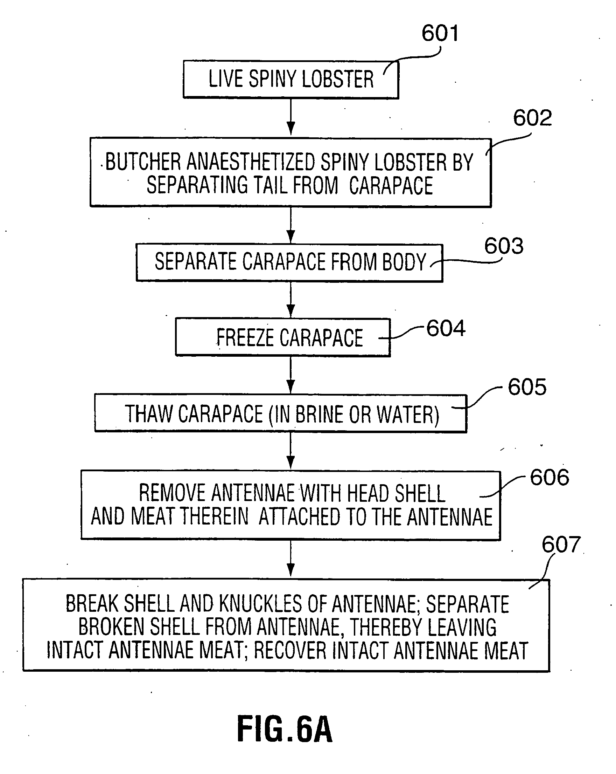

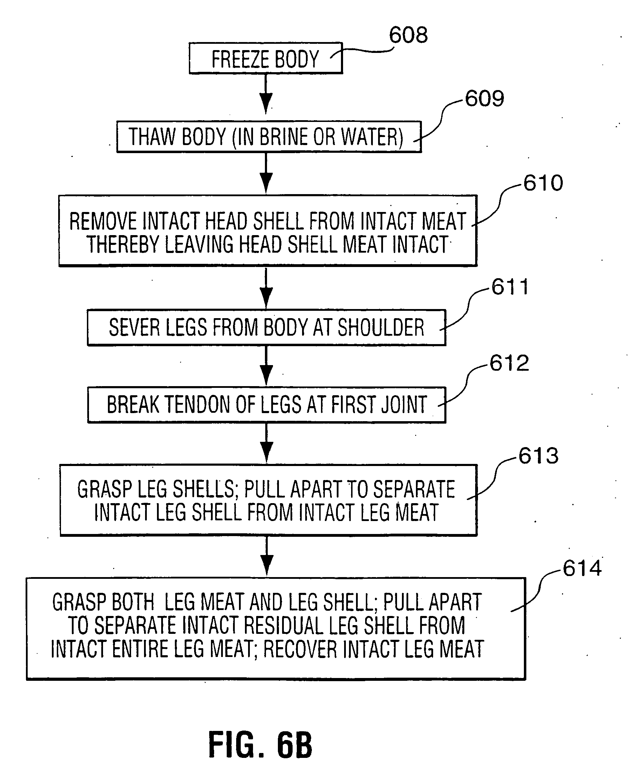

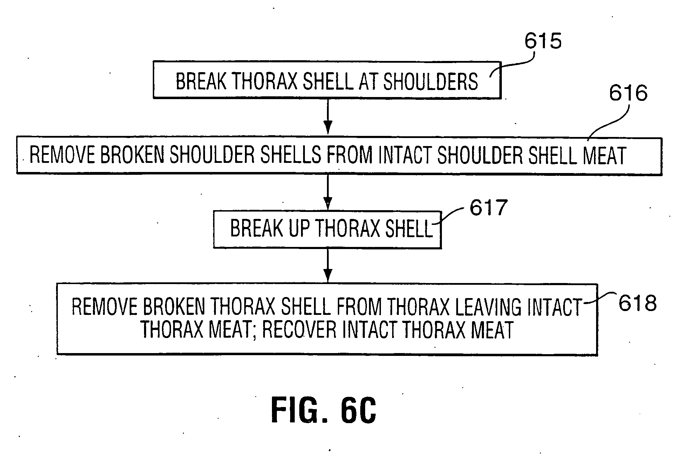

The method applied to hard-to-process species of crab shown in FIG. 6, FIG. 7 and FIG. 8.

FIG. 5 shows a perspective view of a Spiny lobster 500, showing the carapace 501, the antennae 502, the legs 503 and the tail (or body) 504. The Spiny lobster is prevalent in tropical waters, e.g., off Cuba, Belize, Mexico, Brazil, and Australia.

The steps in the processing of the Spiny lobster is shown in the flow sheets of FIG. 6. In FIG. 6A, the live Spiny lobster, (block 601), is anaesthetized, e.g., by immersion in a dilute aqueous solution of a metabisulphite, and then is butchered by separating the tail from the carapace, (block 602). The carapace 501 is separated from the body, (step 603). The carapace is frozen at a temperature ranging from -10°C to -20°C, (step 604). The carapace 501 is then thawed either in cold water or in dilute brine, of 2 to 3 % by weight of sodium chloride, until a temperature of 4°C to 12°C is reached, (step 605). Thawing in cold water or in cold dilute brine facilitates separation of the shell from the meat, and minimizes the deterioration of the flavour of the thawed meat.

The antennae 502 with the head shell and meat therein attached to the antennae is removed from the carapace, (step 606). The head shell is then removed from the meat by the following steps:

The shell and the knuckles of the antennae are broken manually, e.g., by impact with a hammer. Each broken shell segment is grasped and is easily removed from the antennae meat due to the fact that adherence of the shell to the meat was being broken by the freeze-thaw cycle. The intact antennae meat is then recovered, for use in any raw lobster meat products, including possible use in a lobster stuffing, as will be described hereinafter. These steps are collectively designated step 607.

FIG. 6B shows the steps in the processing of the body 504. The body 604 is frozen at a temperature ranging from -10°C to -20°C, (step 608). The body 504 is then thawed either in water or in dilute brine, of 2 % to 3% by weight of sodium chloride, until a temperature of 4°C to 12°C is reached, (step 609). Thawing in cold water or in cold dilute brine facilitates separation of the shell from the meat, and minimizes the deterioration of the flavour of the thawed meat. Because the adherence of the head shell to the head shell meat has been broken by the freeze-thaw cycle, the intact head shell is easily manually removed from the intact head shell meat. The intact head shell meat is then recovered for use in any lobster meat products, including possible use in a lobster stuffing, as will be described hereinafter. These steps are collectively designated step 610.

The legs 503 are then manually severed from the body at the shoulder, (step 611). The tendon at the first joint of the leg 503 is cut. Then the intact leg shell is separated from the intact leg meat by the following steps:

The intact shells of the two parts of the leg, namely the outer part, and the part adjacent to the shoulder, are grasped with different hands, and then pulled apart. The intact shell of the outer part of the leg separates from intact leg meat, and the intact shell is discarded. The intact whole shell meat and the shell of the part adjacent to the shoulder are grasped with different hands and pulled apart. The intact shell separates from the intact leg meat. The intact whole entire leg meat is recovered. These steps are collectively designated step 612, step 613 and step 614. The intact entire whole leg meat is recovered for use in any lobster meat product.

The final stages in the processing of the Spiny lobster are shown in FIG. 6C.

The thorax shell is manually severed at the shoulders, (step 615).

Each severed shoulder shell segment is then grasped and separated from the intact thorax meat. This separation is facilitated since the adherence of the shell to the meat has been broken by the freeze-thaw cycle. The step is designed 616.

The thorax shell is then manually broken up into segments, (step 617).

Each broken thorax shell segment is grasped and removed from the intact thorax meat until all the broken thorax shell segments have been removed, leaving the entire intact thorax meat, which is recovered for use in any lobster meat products, including possible use in a lobster stuffing, as will be described hereinafter. These steps are designated step 618.

It is possible to use the so-recovered Spiny lobster meat to provide a lobster stuffing. While the provision of such a lobster stuffing using the lobster meat which is recovered from the Spiny lobster is not shown by drawings, a generalized description is identical to the description previously given with respect to lobster stuffing from lobsters of the *Homaridae* family. The only change is that Spiny lobster is used. No further description therefore needs to be given.

The raw stuffing blend prepared from raw Spiny lobster roe and Spiny lobster meat components may be introduced into the eviscerated and back-flushed visceral cavity of a lobster either of the *Homaridae* family or a Spiny lobster, via oral intubation. Moreover, raw *Homaridae* lobster roe may be mixed with Spiny lobster meat recovered as described above to provide a stuffing for either a *Homaridae* lobster or a Spiny lobster. Alternatively, a Spiny lobster body may be eviscerated and back-flushed in the same manner as described above for the lobster of the *Homaridae* family. Either of the stuffing blends, (i.e., from Spiny lobster or *Homaridae* lobster) can be introduced into the eviscerated and back-flushed visceral cavity of a Spiny lobster. In this procedure, a metering pump can be utilized, e.g., the one sold by Mari-tech Ltd. (Canada). Dependent upon the size range of the lobster, the amount of blend introduced in the oral cavity will vary. By way of example, the principles of this embodiment of this invention can be applied to Spiny lobsters of varying size range, and most commonly weigh between 250g and 1.5kg. Such amounts required to fill the visceral cavity of Spiny lobsters amount to between 10 % and 15 % of the final weight of the Spiny lobster. Following metered filling of the visceral cavity, the Spiny lobster is subjected briefly to mechanical vibration, wherein the filled Spiny lobster is maintained in a vertical position, with the oral cavity facing uppermost and subjected to a gentle vibrating force. In this procedure, any residual air pockets entrained within the visceral cavity are voided and a complete fill of the cavity is ensured. The final product of this step is a raw stuffed lobster product, either a lobster of the *Homaridae* family or a Spiny lobster.

The raw stuffed lobster can either be frozen as is, for subsequent thawing and cooking, and then vacuum-packed with shrunk-film, or it can be subject to immediate cooking in atmospheric steam conditions of 100°C. Advantageously, the raw stuffed *Homaridae* lobster or Spiny lobster may be placed ventral side uppermost into a process dedicated steam chamber, e.g., the one sold for this purpose by Atlantic Systems Manufacturing Ltd. (Canada), with sufficient duration to achieve an internal temperature in the centre point of the stuffing blend of within the visceral cavity of between 70°C to 85°C. This procedure may be generally-achieved in a time-frame of between 15 minutes to 20 minutes, and would serve to cook the *Homaridae* lobster or Spiny lobster and stuffed contents while still maintaining the integral tail, leg and claw meat sections in an optimal condition. Immediately following attainment of the desired internal temperature, of between 75°C to 85°C, and to avoid post-cook drying of the delicate meat and stuffing blend, the cooked *Homaridae* lobster or Spiny lobster should be cooled rapidly.

The optimal method of cooling the cooked *Homaridae* lobster or Spiny lobster product would be to subject the cooked *Homaridae* lobster or Spiny lobster to hydro-cooling by cold water spray irrigation, directed as a drench to the dorsal surface of *Homaridae* lobster or Spiny lobster positioned with the dorsal surface uppermost. This may be accomplished through the use of a process-dedicated hydro-cooling device, e.g., the one sold by Atlantic Systems Manufacturing Ltd. (Canada). In such application, optimal results can be obtained through the use of either potable fresh water or sea water, in the temperature range of between 1°C and 9°C, for a cooling period of between 5 minutes and 10 minutes, then effecting acceptable heat-reduction from within the centre of the lobster to between 20°C to 30°C. Other procedures involving immersion in ice-water mixes or ice *per se* can be utilized, but these procedures do not lend themselves to industrial applications.

Raw stuffed *Homaridae* lobster or Spiny lobster may be subjected either to freezing, or steam-cooked and cooled stuffed *Homaridae* lobster or Spiny lobster may be subjected to freezing conditions. In either case, the frozen *Homaridae* lobster or Spiny lobster may then be packaged in vacuum-sealable pouches under deep vacuum, in the range of 25 inches to 30 inches of Hg. Optionally, prior to packaging, frozen stuffed and cooked *Homaridae* lobster or Spiny lobster can be bi-sectioned along the longitudinal axis by band-sawing and reconfigured as an intact product prior to vacuum packaging. In terms of the packaging material, optimum shelf-life results may be obtained through use of a heavy-duty shrinkable film laminate, e.g., the material sold by Cryovac (Canada). Moreover, the subsequent film-shrinking by heat exposure serves to minimize potential for breakage of appendages and body parts of the *Homaridae* lobster or Spiny lobster, which is a recognized problem due to the brittle shell characteristics of the *Homaridae* lobster or Spiny lobster.

With the above-described preparative methods of this embodiment of this invention, and with the equipment specifically-designed to support the procedures, up to 400 units per hour of finished *Homaridae lobster* or Spiny lobster can be processed, which is commercially interesting and appealing.

Yet other embodiments of this invention will now be described with reference to hard-to-process species of crabs.

Crabs are decapod crustaceans (10-legged and having a crust or shell). Many species of crabs are abundant, grow large and have a high and nutritious meat yield from their body and legs. Such properties have made them a favourite food for man.

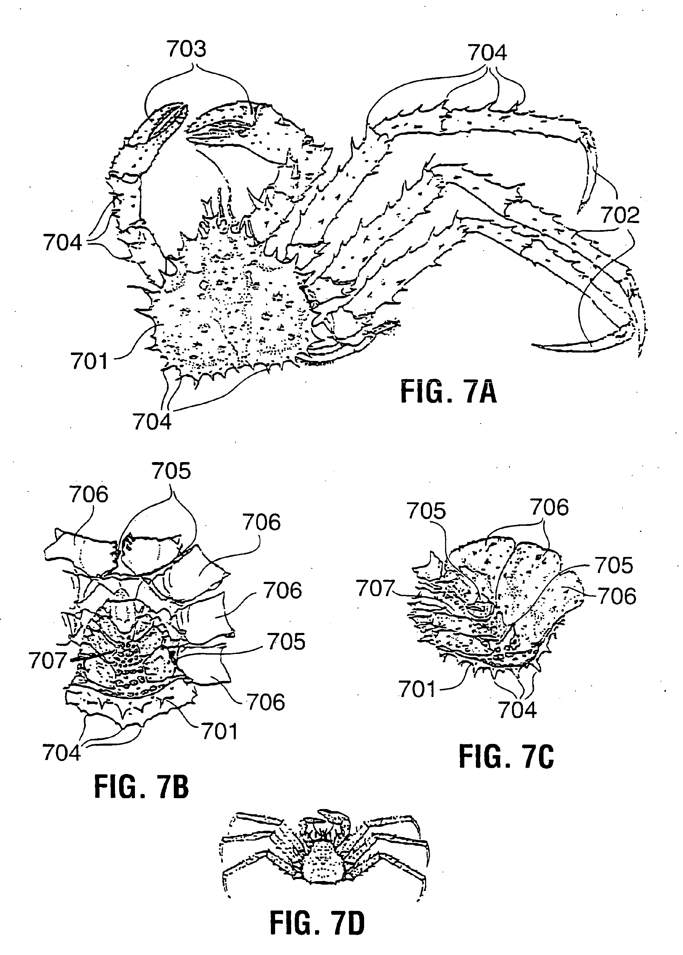

FIGS. 7A, 7B, 7C and 7D show the Northern Stone crab *(Lithodes maja).* FIG. 7A shows the carapace 701, the legs 702 and the claws 703. It is noted that the Northern Stone crab is heavily armoured, and includes a plurality of sharp spines 704 on the carapace 701, on the legs 702 and on the claws 703. FIG. 7B and FIG. 7C show the ends 705 of the shoulder section on the abdomens 706 on body 707 of the Northern Stone crab. FIG. 7D shows an overall view of the Northern Stone crab.

The distinguishing features of the *Lithodes maja* are that its integument is heavily calcified and Spiny. This crab resembles snow crab in size and general shape but is identified by the numerous prominent spines on its carapace and legs. Its carapace is slightly longer than wide. It has a long Spiny rostrum. Only 3 pairs of walking legs are apparent. In size, it is up to 100mm carapace width with a leg spread of 600mm and a weight of 1.4kg. *Lithodes maja* is unique for its pear-shaped shell which is covered with strong spines which are also found on its legs. It has five pairs of legs, the fifth pair being atrophied and hidden under the shell. It is long legged, orange-red in colour, and has numerous sharp spines on its carapace and legs. Its shell is hard and its meat is extremely sweet and delicious. Its claw is a strong claw with blunt teeth designed for cracking heavily-armoured prey.

The Northern Stone crab *(Lithodes maja)* is known to occur in the Atlantic Ocean from Newfoundland to the coast of New Jersey, and northwestern Europe, i.e., off the coasts of Greenland, Iceland, Spitzbergen, the British Isles, the Netherlands and Norway.

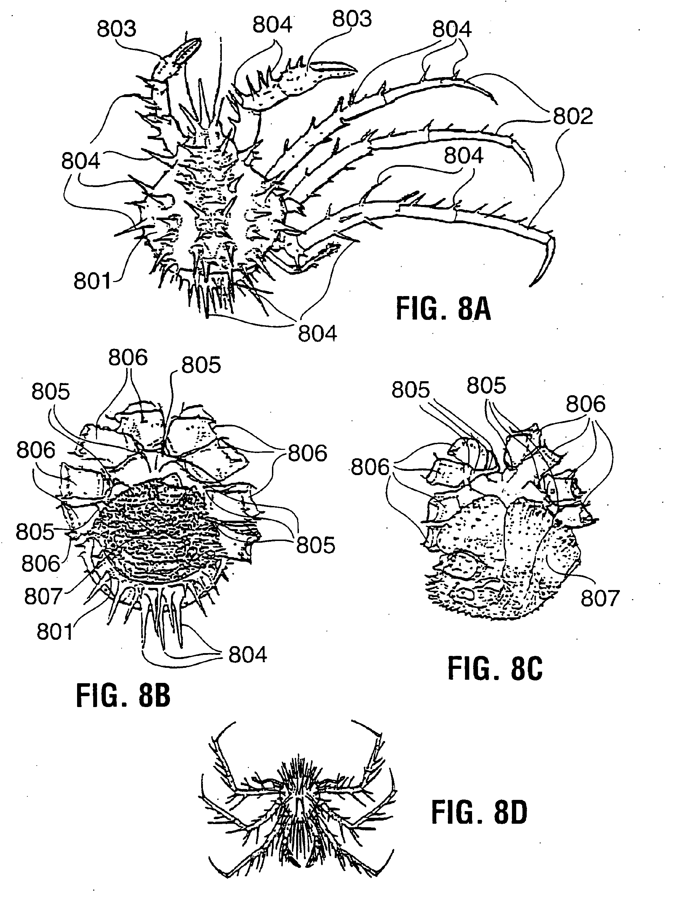

FIGS. 8A, 8B, 8C and 8D show the Porcupine crab *(Neolithodes grimaldii).* FIG. 8A shows the carapace 801, the legs 802 and the claws 803. It is noted that the Porcupine Crab is heavily armoured, and includes a plurality of sharp spines 804 on the carapace 801, the legs 802 and the claws 803. FIG. 8B and FIG. 8C show the ends 805 of the shoulder section 806 on the abdomen of body 807 of the Porcupine Crab. FIG. 8D shows an overall view of the Porcupine crab.

The distinguishing features of *Neolithodes grimaldii* are that it is similar to the Northern Stone Crab, with long legs and is covered with very long spines, namely it has extremely prominent spines on its carapace and appendages. In size it reaches a maximum carapace width of 100mm, a leg spread of 760mm and a weight of 1.4Kg. Its rostrum a single strong spine with divergent spines at its base almost as long. Only its first legs chelate, the right leg being larger than the left. The fifth legs are hidden so it appears that only four pairs of legs are present. The abdomen under carapace has no plicopods in the males and the surface is not divided into plates. In females, the opposite is true, with plates arranged asymmetrically.

The range of distribution of the Porcupine Crab *(Neolithodes grimaldii)* is in the western Atlantic from Greenland to off the coast of North Carolina. In the eastern Atlantic it ranges from Iceland and the British Isles to the Azores and the Cape Verde Islands.

A crab of the *Cancer pagurus* family, namely the Irish crab and a similar crab, i.e., a crab of the *Cancer borealis* family, namely the Jonah crab are very similar to the above crabs. These crabs are similar to rock crab, but their carapace outline is more rounded, its legs relatively shorter but their claws are more massive than those of the rock crab. The claws are heavy claws which are able to exert slow but substantial forces which are ideal for crushing the shells of molluscs, sea urchins and crustaceans. There are nine, rectangular, rough-edged marginal teeth on each side of the front edge of the carapace. The surface of the claws and the carapace is rough. Their background colour is variable but is generally yellow-brown above and yellowish below. In size, they grow up to 180mm carapace width and 0.4kg in weight.

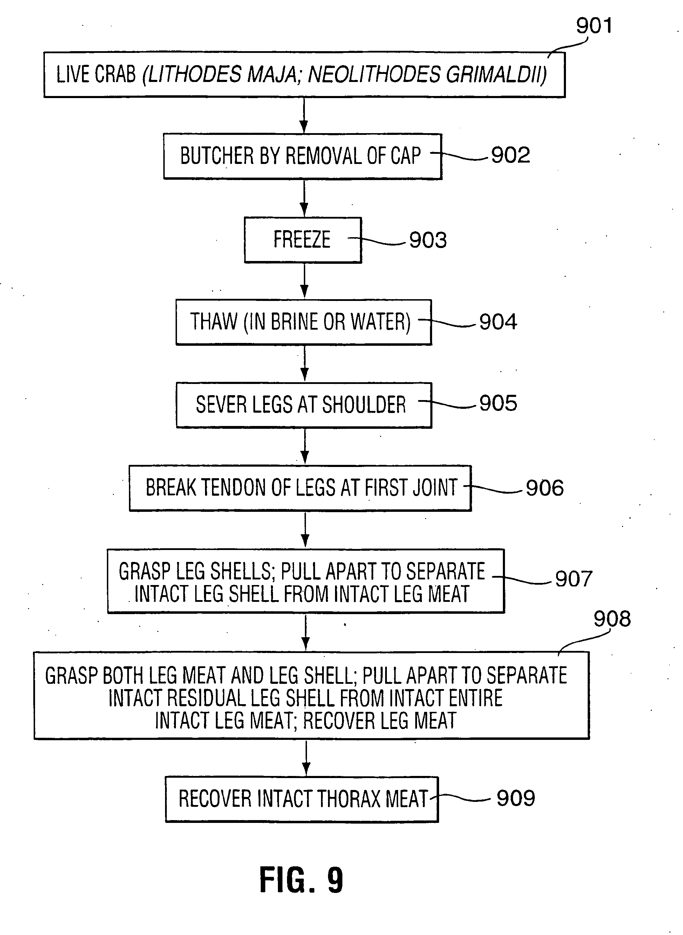

However, as distinct from the normal handling of crabs, the handling of these species of crabs were difficult either because of the long spines, and the labour-intensive processing for what was considered to be a small meat yield, or because of the size and difficulty of processing the legs, or because of the massive size of the claws and the strength of the shells. It was found that utilization of traditional Snow crab or Dungeness crab processing procedures was inefficient. The roller which had heretofore been used for the removal of leg meat, and the brushes which had been used to remove the gills from sections did not work, since pieces of the spines and gills turned up in the meat. Major processing problem were encountered because of difficulties due to the sharp spines and in removing the gills. Accordingly, the present invention in a fourth embodiment has provided a procedure for the processing of these species of crab, and a flow sheet of such method is shown in FIG. 9.

FIG. 9 shows the steps in the processing of two of these species of crab. These two crab species generally comprise a body, claws and flippers and walking legs, including back fins. If the carapace is removed a central body ridge is exposed which extends along the back from the mouth to the stern within the visceral cavity. The body meat of the crab is within the two mounds on either side of the visceral cavity and the lump meats are formed within the mound cavities which are adjacent the stern of the crab body and adjacent and communicating with the back fins. Each of these lump meat cavities is bounded internally of the crab body by a bony wall which is concave on the side of the cavity, and the two walls are connected by a bony plate which bridges the visceral cavity.

The visceral cavity may be eviscerated by piercing the body, e.g., through the mouth and the mouth, stomach, and other portions of the gut substantially removed, by suction (known as vacuum evisceration).

The crab 901 is first butchered by the removal of the cap, which is the top of the head shell, (step 902). Then the capless crab is frozen at a temperature ranging from -10°C to -20°C, (step 903). The capless crab is then thawed, either in water or in dilute brine, of 2 to 3 % by weight of sodium chloride, until a temperature of 4°C to 12°C is reached, (step 904).

The legs are then manually severed from the capless crab at the shoulder, (step 905). The tendon at the first joint of the crab leg is cut. Then the intact leg shell is separated from the intact leg meat by the following steps:

To protect the human processor, only the spines on the legs are broken by impact with a hammer, while retaining the shell intact. The intact shells of the two parts of the leg, namely the outer part, and the part adjacent to the shoulder are then grasped with different hands, and then pulled apart. The shell of the outer part of the leg separates from intact whole leg meat, and the intact shell is discarded. The intact whole leg meat and the shell of the part adjacent to the shoulder are grasped with different hands and pulled apart. The intact shell separates from the intact whole leg meat. The intact entire leg meat is recovered. These steps are collectively designated step 906, step 907 and step 908. The intact entire whole leg meat is recovered for use in any crab meat product.

Because the adherence of the head shell to the crab meat has been broken by the freeze-thaw cycle, the intact shell is easily manually removed from the intact crab meat. The intact crab meat is then recovered for use in any crab meat products, including possible use in a crab stuffing, as will be described hereinafter These steps are designated step 909.

It may be possible to use the so-recovered crab meat to provide a crab stuffing. While the provision of such a crab stuffing using the crab meat which is recovered from these two species of crab is not shown by drawings, a generalized description thereof now follows:

Raw roe may be manually-extracted from the gravid female crab of any species, including *Lithodes maja, Neolithodes grimaldii, Cancer pagurus* and *Cancer borealis,* and then may be subjected, either to chilling, or freezing under vacuum conditions. If frozen, the crab roe must be thawed prior to blending with the crab meat which has been extracted according to procedures described above. The crab roe and the crab meat fractions are blended together in a manner which is exactly equivalent to the manner of the blending of lobster roe and lobster meat (of any species) as previously described, including proportion. No further description needs to be given.

The raw stuffing blend prepared from raw crab roe and raw crab meat components, as described above, from e.g., *Lithodes maja, Neolithodes grimaldii, Cancer pagurus* and *Cancer borealis,* may be introduced into the eviscerated and back-flushed visceral cavity of a crab of any species, e.g., Snow crab, Maryland Blue crab, Alaska King crab, Dungeness crab, Northern Stone crab, Porcupine crab, Irish crab, Jonah crab, etc., via oral intubation. This procedure is identical to the procedure previously described with reference to that carried out on lobsters (of any species) and so need not be described further. In this procedure, a metering pump can be utilized, e.g., the one sold by Mari-tech Ltd. (Canada). Dependent upon the size range of the crab, the amount of blend introduced in the visceral cavity will vary. By way of example, the principles of this embodiment of this invention can be applied to crabs of any species of varying size range, and most commonly weigh between 250g and 1.5kg. Such amounts required to fill the visceral cavity of crab amount to between 10% and 15% of the final weight of the crab. Following metered filling of the visceral cavity, the crab is subjected briefly to mechanical vibration, wherein the filled crab is maintained in a vertical position, with the visceral cavity facing uppermost and subjected to a gentle vibrating force. In this procedure, any residual air pockets entrained within the visceral cavity are voided and a complete fill of the cavity is ensured. The final product of this step is a raw stuffed crab, of any species of crab.

The raw stuffed crab of any crab species can either be frozen as is, for subsequent thawing and cooking, and then vacuum-packed with shrunk-film, or it can be subject to immediate cooking in atmospheric steam conditions of 100°C.

The optimal method of cooling the cooked stuffed crab of any crab species would be identical to the procedure previously described with reference to the cooling of lobsters (of any species) and so need not be described further.

Raw stuffed crab of any species may be subjected either to freezing, or steam-cooked and cooled stuffed crab may be subjected to freezing conditions. This procedure is identical to the procedure previously described with reference to the freezing and/or steam-cooking of lobsters (of any species) and so need not be described further.

With the above-described preparative methods of this embodiment of this invention, and with the equipment specifically-designed to support the procedures, up to 400 units per hour of finished stuffed crab can be processed, which is commercially interesting and appealing. While the flow scheme of FIG. 9 specifically refers to the processing of *Lithodes maja* and *Neolithodes grimaldii,* it can be adapted for the processing of *Cancer pagurus* or *Cancer borealis.*

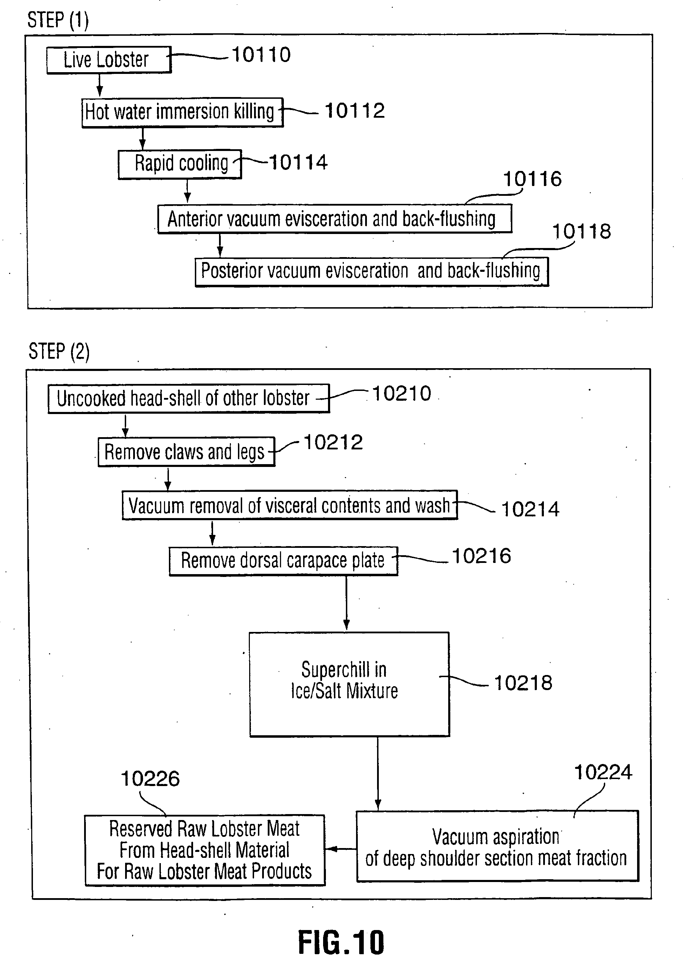

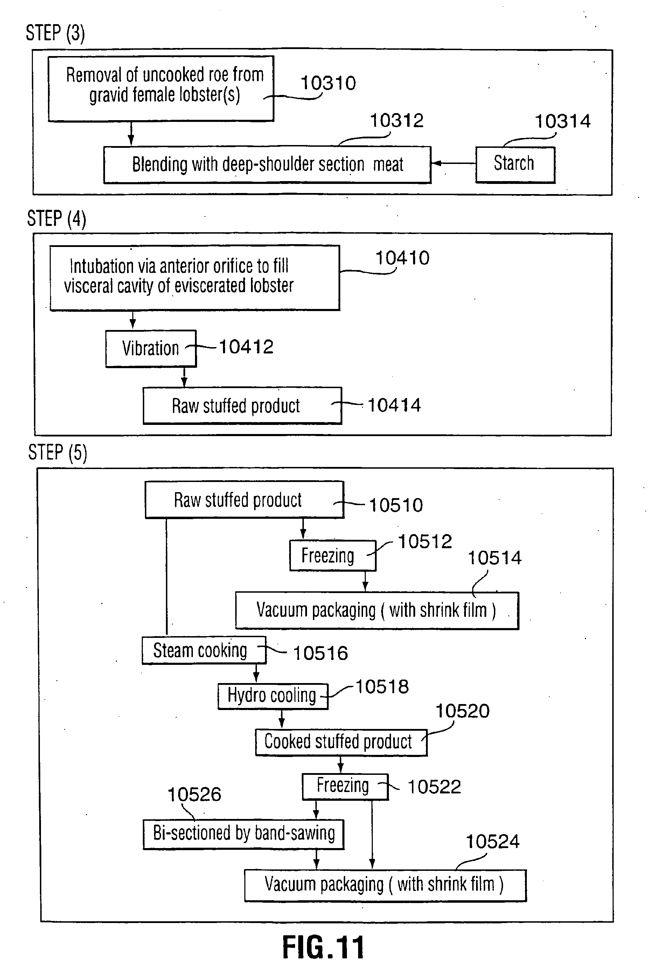

The method involved in a fifth broad embodiment of the present invention for preparing a stuffed lobster product is comprised of five steps, respectively referred to as (1), (2), (3), (4) and (5), and are described with reference to FIG. 10 and FIG. 11.

### Step (1)

The first step, Step (1) of the method of this embodiment of the invention, involves killing of live lobsters (block 10110) by hot water immersion (block 10117), under conditions ranging between 50°C and 95°C, for a duration of between 40 seconds and 80 seconds, with immediate rapid cooling by transfer to cold water conditions (block 10114) at temperatures ranging between 0°C and 10°C for a duration of between 2 minutes to 10 minutes. Lobsters, so-treated, are then subjected to vacuum evisceration of the anterior visceral region (block 10116), and to posterior vacuum evisceration and back-flushing (block 10118) e.g., as described above in U.S. Patent No. 3,773,962, and in the previous embodiments hereinabove. Accordingly, no further description needs to be given. In one preferred embodiment, the above eviscerated and back-flushed lobster product is maintained in either in a fresh or in a frozen-thawed condition prior to the introduction of the stuffing-blend material.

### Step (2)

In the second step, Step (2) of the method of this embodiment of the invention, raw head-shell sections of lobsters (block 10210), derived from lobsters which have been subjected to raw-tail-severance procedures, are then subjected to vacuum removal of visceral contents and washing, as previously-described (block 10214). Then the lobster is prepared by manual removal of legs and claws (block 10212), prior to the manual removal of the dorsal carapace plate (block 10216), which reveals the remaining head-shell section containing the edible meat fractions which are intimately-connected and associated with the cartilaginous exoskeleton. In one specific embodiment, the deep-shouldered sections yielding up to 5 % of edible meat fraction from the lobster are the focus of this second step. Head-shell carapace material, so-prepared, is subjected to a superchill procedure in an ice/salt mixture (block 10218), i.e., it is placed in an insulated container and is buried in an ice/sodium chloride mixture until the temperature of the head-shell carapace is lowered to from +3°C to -3°C, which facilitates the subsequent vacuum aspiration of the deep-shoulder myotomal meat from the deep-shoulder fraction. The loosened deep-shoulder myotomal meat is then removed from the deep-shoulder compartments by vacuum aspiration (block 10224), utilizing a vacuum nozzle of between 10 cm and 16 cm length and a diameter of between 5 mm and 10 mm. Deep-shoulder myotomal meat so-removed, is collected in pan-traps which are associated with the vacuum line, providing a vacuum of between 15 inches and 25 inches of Hg. In this embodiment, vacuum extraction of between 1 kg to 2 kg per person/hour of raw deep-shoulder myotomal meat can be obtained. The deep-shoulder myotomal meat so-extracted can either be held chilled, or frozen prior to further use, for the stuffing recipe to be described in Step (3), hereinafter, or it may be reserved for other applications in other conventional raw lobster meat products and recipes (block 10226).

The reserved raw lobster deep-shoulder myotomal meat which is retrieved from the head-shell in Step (2) can thus be used for a variety of other lobster products.

### Step (3)

In the third step, Step (3) of the method of this embodiment of the invention, raw roe is removed from gravid female lobsters (block 10310), and the lobster is subjected to traditional raw-tail severance processing methods. The roe is manually-extracted and subjected, either to chilling, or freezing under vacuum conditions. If frozen, the roe must be thawed prior to blending with the deep-shoulder section meat which has been extracted according to procedures described in the above Step (2). The roe and the deep-shoulder myotomal meat fractions are blended together (block 10312) in proportions as have been fully described for the other embodiments and so need not be described further. The blending procedure is preferably achieved as fully described hereinabove for the other embodiments until a creamy liquid consistency is achieved. During such processing, from 900g to 990g per kilogram of blend, and, e.g., from 10g to 100g of an edible starch (block 10314), e.g., the one sold by Nacan Products Limited (USA), is added to the blend (block 10312), to ensure its freeze-thaw stability. The lobster roe and the deep-shoulder myotomal meat extracted as described in Step (2) above (block 10310) is mixed with the starch (block 3314). The lobster roe and the weight ratio of deep-shoulder myotomal meat extracted as described in Step (2) above (block 10310) to the starch (block 10314) may vary from between 5:5 and 9:1, a desirable range being from 6:4 to 8:2.

The paste of lobster roe and the deep-shoulder myotomal meat extracted as described in Step (2) above and starch (block 10312) may be mixed under reduced pressure, as described hereinabove for the other embodiments.

Examples of suitable agitators have been given in respect of the other embodiments for the processing of lobsters. At this point, the liquid-blend can either be frozen, preferably under vacuum, or intubated into eviscerated lobsters in the chilled form.

### Step (4)

In the fourth step, Step (4) of this method of this embodiment of this invention, the raw blend material which has been prepared from raw roe and deep-shoulder myotomal meat components, as described above, are introduced into the eviscerated and back-flushed visceral cavity of the lobster, via oral intubation (block 10410). In this procedure, a metering pump can be utilized, e.g., the one sold by Mari-tech Ltd. (Canada). Dependent upon the size range of the lobster, the amount of blend introduced in the oral cavity will vary By way of example, the principles of this embodiment of this invention can be applied to lobsters of varying size range, and most commonly those which weigh between 250g and 1.5kg. Such amounts required to fill the visceral cavity of lobsters amount to between 10 % and 15% of the final weight of the lobster. Following metered filling of the visceral cavity, the lobster is subjected briefly to mechanical vibration (block 10412), wherein the filled lobster is maintained in a vertical position, with the oral cavity facing uppermost and subjected to a gentle vibrating force. In this procedure, any residual air pockets which are entrained within the visceral cavity are voided and a complete fill of the cavity is ensured. The final product of this step is a raw stuffed lobster product (block 10414).

### Step (5)

In the final fifth step, Step (5), of this method of this embodiment of this invention, the raw stuffed lobster product (block 10510) can either be frozen as is, for subsequent thawing and cooking (block 10512), and then vacuum-packed with shrunk-film (block 10514), or it can be subject to immediate cooking under atmospheric steam conditions (block 10516) of 100°C. Advantageously, very good results have been obtained using the procedures and conditions described hereinabove for the other embodiments for the processing of lobster.

The optimal method of cooling the cooked lobster product has been to subject the cooked lobster to hydro-cooling by cold water spray irrigation (block 10518), directed as a drench to the dorsal surface of lobsters positioned with the dorsal surface uppermost. Most efficient results have been obtained through the use of a process-dedicated hydro-cooling device, as described above for the other embodiments of the invention for lobsters and under same conditions described for the other embodiments.

As a part of this final step, either raw stuffed lobster is subjected to freezing (block 10512), or steam-cooked and cooled stuffed lobster (block 10520) is subjected to freezing conditions (block 10522). In either case, the frozen lobster is then packaged in vacuum-sealable pouches under deep vacuum, in the range of 25 inches to 30 inches of Hg (block 10524). Optionally, prior to packaging, frozen stuffed and cooked lobster can be bi-sectioned (block 10526), along the longitudinal axis by band-sawing and reconfigured as an intact product prior to vacuum packaging. In terms of the packaging material, optimum shelf-life results are obtained through use of a heavy-duty shrinkable film laminate, e. g., the material sold by Cryovac (Canada). Moreover, the subsequent film-shrinking by heat exposure serves to minimize potential for breakage of appendages and body parts of the lobster, which is a recognized problem due to the brittle shell characteristics of the lobster.

With the above-described preparative methods of this embodiment of this invention, and with the equipment specifically-designed to support the procedures, up to 400 units per hour of finished lobster products can be processed, which is commercially interesting and appealing.

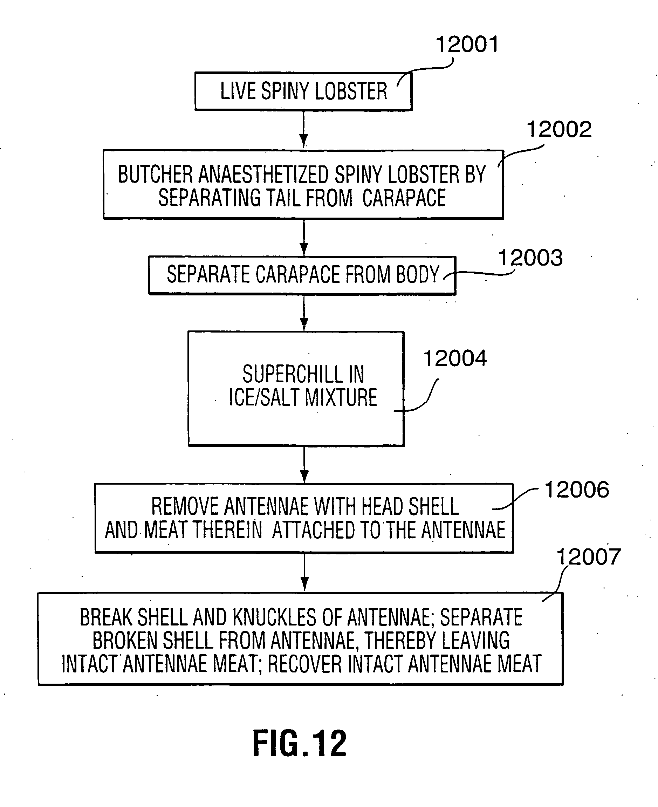

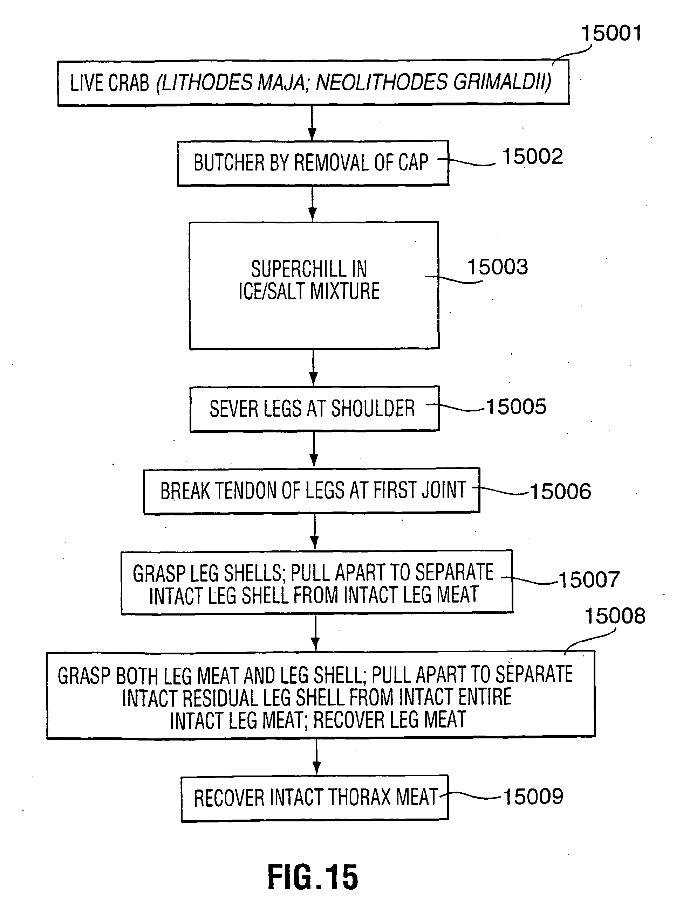

The method as described above as applied to Spiny lobster, as a fifth embodiment of this invention, will be described hereinafter with reference to FIG. 12, FIG. 13 and FIG. 14. The method as described above as applied to various species of crab, as a sixth embodiment of this invention, Will be described hereinafter with reference to FIG. 15.

The steps in the processing of the Spiny lobster is shown in the flow sheets of FIG. 12, FIG. 13 and FIG. 14. The live Spiny lobster, (block 12001), is anaesthetized, e. g., by immersion in a dilute aqueous solution of a metabisulphite, and then is butchered by separating the tail from the carapace, (block 12002). The carapace 12001 is then separated from the body, (step 12003). The carapace is superchilled in an ice/salt mixture (block 12004), e. g., by being placed in an insulated container and being buried in an ice/sodium chloride mixture until the temperature of the carapace is reduced to from +3°C to -3°C. Superchilling at +3°C to -3°C in an ice/sodium chloride mixture facilitates separation of the shell from the meat, and minimizes the deterioration of the flavour of the thawed meat.

The antennae with the head shell and meat therein attached to the antennae is removed from the carapace, (step 12006). The head shell is then removed from the meat by the following steps :

The shell and the knuckles of the antennae are broken manually, e. g., by impact with a hammer. Each broken shell segment is grasped and is easily removed from the antennae meat due to the fact that adherence of the shell to the meat broken by the superchilling in the ice/salt mixture. The intact antennae meat is then recovered, for use in any raw lobster meat products, including possible use in a lobster stuffing, as will be described hereinafter. These steps are collectively designated step 12007.

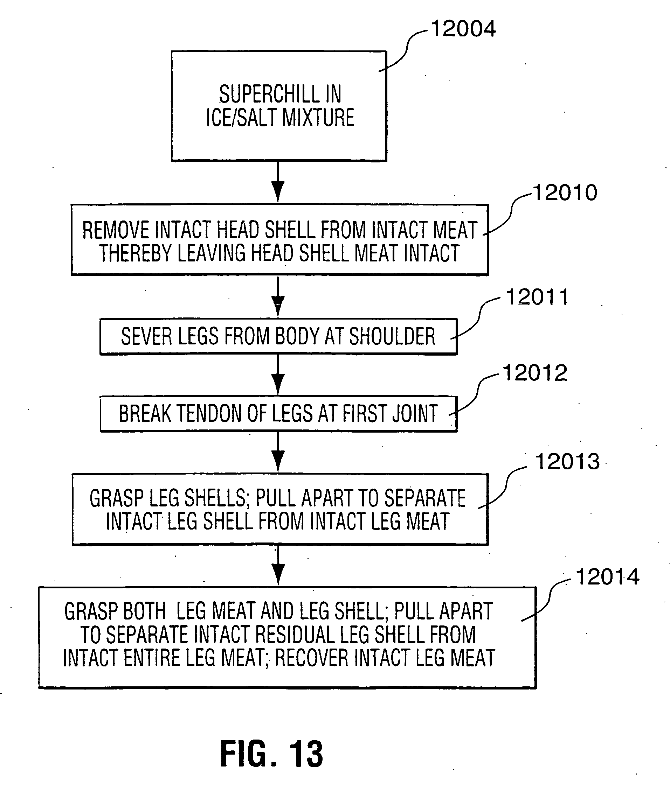

FIG. 13 shows the steps in the processing of the body. The body has been superchilled to +3°C to -3°C, as described above, which facilitates separation of the shell from the meat, and minimizes the deterioration of the flavour of the thawed meat. Because the adherence of the head shell to the head shell meat has been broken by the superchilling in the ice/salt mixture, the intact head shell is easily manually removed from the intact head shell meat. The intact head shell meat is then recovered for use in any lobster meat products, including possible use in a lobster stuffing, as will be described hereinafter. These steps are collectively designated step 12010.

The legs are then manually severed from the body at the shoulder, (step 12011). The tendon at the first joint of the leg is cut. Then the intact leg shell is separated from the intact leg meat by the following steps:

The intact shells of the two parts of the leg, namely the outer part, and the part adjacent to the shoulder, are grasped with different hands, and then pulled apart. The intact shell of the outer part of the leg separates from intact leg meat, and the intact shell is discarded. The intact whole shell meat and the shell of the part adjacent to the shoulder are grasped with different hands and pulled apart. The intact shell separates from the intact leg meat. The intact whole entire leg meat is recovered. These steps are collectively designated step 12012, step 12013 and step 12014. The intact entire whole leg meat is recovered for use in any lobster meat product.

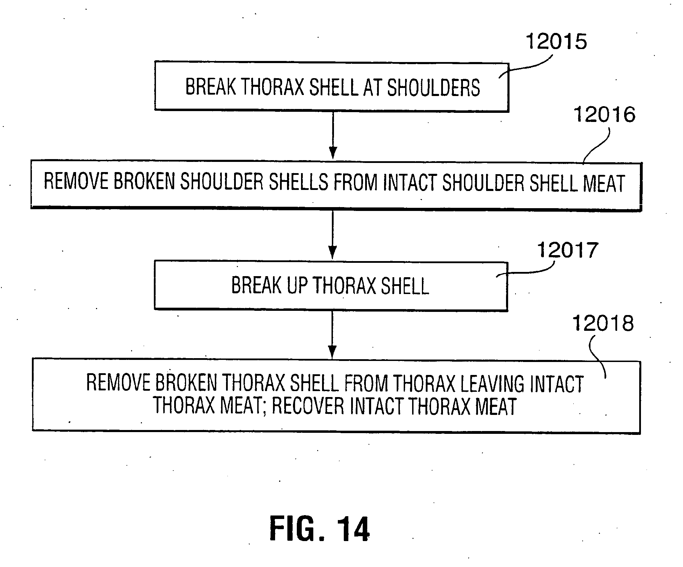

The final stages in the processing of the Spiny lobster are shown in FIG. 14.

The thorax shell is manually severed at the shoulders, (step 12015).

Each severed shoulder shell segment is then grasped and separated from the intact thorax meat. This separation is facilitated since the adherence of the shell to the meat has been broken by the super chilling in the ice/salt mixture. The step is designed 12016.

The thorax shell is then manually broken up into segments, (step 12017).

Each broken thorax shell segment is grasped and removed from the intact thorax meat until all the broken thorax shell segments have been removed, leaving the entire intact thorax meat, which is recovered for use in any lobster meat products, including possible use in a lobster stuffing, as will be described hereinafter. These steps are designated step 12018.

It is possible to use the so-recovered Spiny lobster meat to provide a lobster stuffing. While the provision of such a lobster stuffing using the lobster meat which is recovered from the Spiny lobster is not shown by drawings, a generalized description thereof is identical to the generalized description for lobster stuffing described hereinabove for the other embodiments. The only difference is that the lobster is Spiny lobster.

The paste of lobster roe and lobster meat extracted as described above and starch may be mixed under reduced pressure as described hereinabove for the other embodiments.

The raw stuffmg blend prepared from raw Spiny lobster roe and Spiny lobster meat components, as described above, may be introduced into the eviscerated and back-flushed visceral cavity of a lobster either of the *Homaridae* family or a Spiny lobster, via oral intubation. Moreover, raw *Homaridae* lobster roe may be mixed with Spiny lobster meat recovered as described above to provide a stuffing for either a *Homaridae* lobster or a Spiny lobster. Alternatively, a Spiny lobster body may be eviscerated and back-flushed in the same manner as described above for the lobster of the *Homaridae* family, and either of the stuffing blends can be introduced into the eviscerated and back-flushed visceral cavity of a Spiny lobster. In this procedure, as described for the other embodiments, a metering pump can be utilized. Dependent upon the size range of the lobster, the amount of blend introduced in the oral cavity will vary. The final product of this step is a raw stuffed lobster product, either a lobster of the *Homaridae* family or a Spiny lobster.

The raw stuffed lobster can either be frozen as is, for subsequent thawing and cooking, and then vacuum-packed with shrunk-film, or it can be subject to immediate cooking in atmospheric steam conditions of 100°C as described hereinabove for the other embodiments for the processing of lobster.

The optimal method of cooling the cooked *Homaridae* lobster or Spiny lobster product would be to subject the cooked *Homaridae* lobster or Spiny lobster to hydro-cooling by cold water spray irrigation, directed as a drench to the dorsal surface of *Homaridae* lobster or Spiny lobster positioned with the dorsal surface uppermost. This may be accomplished as described hereinabove for the other embodiments for the processing of lobster.

Raw stuffed *Homaridae* lobster or Spiny lobster may be subjected either to freezing, or steam-cooked and cooled stuffed *Homaridae* lobster or Spiny lobster may be subjected to freezing conditions. In either case, the frozen *Homaridae* lobster or Spiny lobster may then be packaged in vacuum-sealable pouches under deep vacuum, in the range of 25 inches to 30 inches of Hg. Optionally, prior to packaging, frozen stuffed and cooked *Homaridae* lobster or Spiny lobster can be bi-sectioned along the longitudinal axis by band-sawing and reconfigured as an intact product prior to vacuum packaging. In terms of the packaging material, optimum shelf-life results may be obtained through use of a heavy-duty shrinkable film laminate, e.g., the material sold by Cryovac (Canada). Moreover, the subsequent film-shrinking by heat exposure serves to minimize potential for breakage of appendages and body parts of the *Homaridae* lobster or Spiny lobster, which is a recognized problem due to the brittle shell characteristics of the *Homaridae* lobster or Spiny lobster.

With the above-described preparative methods of this embodiment of this invention, and with the equipment specifically-designed to support the procedures, up to 400 units per hour of finished *Homaridae lobster* or Spiny lobster can be processed, which is commercially interesting and appealing.

Yet other embodiments of this invention will now be described with reference to other hard-to-process species of crabs as described hereinabove for other embodiments.

FIG. 15 shows the steps in the processing of two of these species of crab but is not to be limited thereby. These two crab species generally comprise a body, claws and flippers and walking legs, including back fins. If the carapace is removed a central body ridge is exposed which extends along the back from the mouth to the stern within the visceral cavity. The body meat of the crab is within the two mounds on either side of the visceral cavity and the lump meats are formed within the mound cavities which are adjacent the stern of the crab body and adjacent and communicating with the back fins. Each of these lump meat cavities is bounded internally of the crab body by a bony wall which is concave on the side of the cavity, and the two walls are connected by a bony plate which bridges the visceral cavity. The visceral cavity may be eviscerated by piercing the body, e.g., through the mouth and the mouth, stomach, and other portions of the gut substantially removed, by suction (known as vacuum evisceration).

The crab 15001 is first butchered by the removal of the cap, which is the top of the head shell, (step 15002). Then the capless crab is subjected to a superchilled procedure in an ice/salt mixture (step15003) by being placed in an insulated container and by being buried in an ice/sodium chloride mixture until the temperature of the carapace is from +3°C to -3°C.

The legs are then manually severed from the capless crab at the shoulder, (step 15005). The tendon at the first joint of the crab leg is cut. Then the intact leg shell is separated from the intact leg meat by the following steps:

To protect the human processor, only the spines on the legs are broken by impact with a hammer, while retaining the shell intact. The intact shells of the two parts of the leg, namely the outer part, and the part adjacent to the shoulder are then grasped with different hands, and then pulled apart. The shell of the outer part of the leg separates from intact whole leg meat, and the intact shell is discarded. The intact whole leg meat and the shell of the part adjacent to the shoulder are grasped with different hands and pulled apart. The intact shell separates from the intact whole leg meat. The intact entire leg meat is recovered. These steps are collectively designated step15006, step 15007 and step 15008. The intact entire whole leg meat is recovered for use in any crab meat product.

Because the adherence of the head shell to the crab meat has been broken by the superchilling in the ice/salt mixture, the intact shell is easily manually removed from the intact crab meat. The intact crab meat is then recovered for use in any crab meat products, including possible use in a crab stuffing, as will be described hereinafter. These steps are designated step 15009.

It may be possible to use the so-recovered crab meat to provide a crab stuffing. While the provision of such a crab stuffmg using the crab meat which is recovered from these two species of crab is not shown by drawings, a generalized description thereof now follows:

Raw crab roe may be manually-extracted from the gravid female crab of any species, including *Lithodes maja, Neolithodes grimaldii, Cancer pagurus* and *Cancer borealis,* and then may be subjected, either to chilling, or freezing under vacuum conditions, as described hereinabove for other embodiments of crab.

The paste of the crab roe and the crab meat extracted as described above and starch may be mixed under reduced pressure, as described hereinabove for other embodiments for the processing of crab.

Examples of suitable agitators have been described hereinabove for other embodiments for the processing of crab.

The raw stuffing blend prepared from raw crab roe and raw crab meat components, as described above, from, e.g., *Lithodes maja, Neolithodes grimaldii, Cancer pagurus* and *Cancer borealis,* may be introduced into the eviscerated and back-flushed visceral cavity of a crab of any species, e.g., Snow crab, Maryland Blue crab, Alaska King crab, Dungeness crab, Northern Stone crab, Porcupine crab, Irish crab, Jonah crab, etc., via oral intubation, as described hereinabove for other embodiments of crab. The final product of this step is a raw stuffed crab, of any species of crab.

The raw stuffed crab of any crab species can either be frozen as is, for subsequent thawing and cooking, and then vacuum-packed with shrunk-film, or it can be subject to immediate cooking in atmospheric steam conditions of 100°C, as described hereinabove for other embodiments for the processing of crab.

The optimal method of cooling the cooked stuffed crab of any crab species would be to subject the cooked stuffed crab to hydro-cooling by cold water spray irrigation, directed as a drench to the dorsal surface of crabs which are positioned with the dorsal surface uppermost. This may be accomplished, as described hereinabove for other embodiments for the processing of crab.

Raw stuffed crab of any species may be subjected either to freezing, or steam-cooked and cooled stuffed crab may be subjected to freezing conditions. In either case, the frozen crab may then be packaged in vacuum-sealable pouches under deep vacuum, in the range of 25 inches to 30 inches of Hg. Optionally, prior to packaging, frozen stuffed and cooked crab can be bi-sectioned, along the longitudinal axis by band-sawing and reconfigured as an intact product prior to vacuum packaging. In terms of the packaging material, optimum shelf-life results may be obtained through use of a heavy-duty shrinkable film laminate, e.g., the material sold by Cryovac (Canada). Moreover, the subsequent film-shrinking by heat exposure serves to minimize potential for breakage of appendages and body parts of the crab.

With the above-described preparative methods of this embodiment of this invention, and with the equipment specifically-designed to support the procedures, up to 400 units per hour of finished stuffed crab can be processed, which is commercially interesting and appealing. While the flow scheme of FIG. 15 specifically refers to the processing of *Lithodes maja* and *Neolithodes grimaldii,* it can be adapted for the processing of *Cancer pagurus* or *Cancer borealis,* or any other species of crab.

### (viii) WAY IN WHICH INVENTION IS CAPABLE OF EXPLOITATION BY INDUSTRY

The lobster obtained by the first broad embodiment of this invention has proven to offer excellent taste and texture characteristics, served in either the intact form, or as bi-sectioned split halves. The lobster obtained by this second broad embodiment of the invention, has proven to offer excellent taste and texture characteristics, served in either the intact form, or as bi-sectioned split halves. The lobster obtained by this fifth broad embodiment of the invention, has proven to offer excellent taste and texture characteristics, served in either the intact form, or as bi-sectioned split halves. The raw Spiny lobster meat obtained according to the method of this third broad embodiment of the invention, has proven to offer excellent taste and texture characteristics, when served. The raw Spiny lobster meat, obtained according to the method of this sixth broad embodiment of the invention, has proven to offer excellent taste and texture characteristics, when served. The lobster can be presented as either chill-thawed or re-warmed, as preferred by consumers. The high-quality appearance of the product is assured through definition of very white meat containing no visible intestinal content, nor hepatopancreatic visceral staining, and a very attractive coral pink stuffing, which through the preparative method is assured, of attaining very intimate entrainment and interface to the internal shell contours and anterior abdominal facet of the tail meat. The overall appearance is of a continuum of stuffing-blend and white tail meat. One important element of this first broad embodiment of this invention, of the second broad embodiment of this invention, of the third broad embodiment of this invention, of the fifth broad embodiment of this invention, and of the sixth broad embodiment of this invention lies in the effective removal of all of the hepatopancreatic (tomalley) fraction from the raw lobster, and, thereby, minimization of residual trace heavy-metal content, which has been shown to migrate into the edible meat fraction during traditional cooking procedures applied to live lobster. This first broad embodiment of this invention, this second broad embodiment of this invention, this third broad embodiment of this invention, this fifth broad embodiment of this invention, and this sixth broad embodiment of this invention all serve to meet ever increasingly-stringent requirements by nations for minimum acceptable tolerance levels for certain heavy-metal components.

The crab meat which is obtained from, e.g., *Lithodes maja, Neolithodes grimaldii, Cancer pagurus* and *Cancer borealis,* according to the method of this fourth broad embodiment of the invention, has proven to offer excellent taste and texture characteristics, when served. The crab meat obtained from, e.g., *Lithodes maja, Neolithodes grimaldii, Cancer pagurus* and *Cancer borealis,* according to the method of this seventh broad embodiment of the invention, has proven to offer excellent taste and texture characteristics, when served. The stuffed crab may be served either in the intact form, or as bi-sectioned split halves. The product may be presented as either chill-thawed or re-warmed, as preferred by consumers. The high-quality appearance of the crab product is assured through definition of very white meat containing no visible intestinal content, nor hepatopancreatic visceral staining. A very attractive coral pink stuffing may be provided through the preparative method described. The stuffing attains very intimate entrainment and interface to the internal shell contours and anterior abdominal facet of the tail meat. The overall appearance of such stuffed crab is of a continuum of stuffing-blend and white tail meat. This fourth broad embodiment of this invention and this seventh broad embodiment of this invention both serve to meet ever increasingly-stringent requirements by nations for minimum acceptable tolerance levels for certain heavy-metal components.

## Claims

1. A method for separating raw edible crustacean meat from the intact shell of hard-shelled crustacean in which said meat is very strongly adhered to said shell, said method comprising:
a) initiating the detachment of said raw edible crustacean meat from said intact shell by the step of subjecting said intact shell to at least one freeze-thaw cycle, wherein said thawing is accomplished at a temperature range of 1°C to 10°C in cold water or in a cold dilute solution of brine; and
b) separating said intact shell from said detached raw edible crustacean meat and recovering said raw edible crustacean meat by the step of subjecting the so-treated intact shell to vacuum aspiration to remove and recover said raw edible meat.

2. A method for separating raw edible crustacean meat from the intact shell of hard-shelled crustacean in which said meat is very strongly adhered to said shell, said method comprising:
a) initiating the detachment of said raw edible crustacean meat from said intact shell by the step of subjecting said intact shell to at least one freeze-thaw cycle, wherein said thawing is accomplished at a temperature range of 1 °C to 10°C in cold water or in a cold dilute solution of brine; and
b) separating said intact shell from said detached raw edible crustacean meat and recovering said raw edible crustacean meat by the step of manually removing intact shell from intact raw edible crustacean meat, recovering said raw intact crustacean meat and discarding said shell.

3. A method for separating raw edible crustacean meat from the intact shell of hard-shelled crustacean in which said meat is very strongly adhered to said shell, said method comprising:
a) initiating the detachment of said raw edible crustacean meat from said intact shell by the step of subjecting said intact shell to the action of a superchilled ice/salt mixture at a maximum low temperature of the eutectic temperature; and
b) separating said intact shell from said detached raw edible crustacean meat and recovering said raw edible crustacean meat by the step of subjecting the so-treated intact shell to vacuum aspiration to remove and recover said raw edible meat.

4. A method for separating raw edible crustacean meat from the intact shell of hard-shelled crustacean in which said meat is very strongly adhered to said shell, said method comprising:
a) initiating the detachment of said raw edible crustacean meat from said intact shell by the step of subjecting said intact shell to the action of a superchilled ice/salt mixture at a maximum low temperature of the eutectic temperature; and
b) separating said intact shell from said detached raw edible crustacean meat and recovering said raw edible crustacean meat by the step of manually removing intact shell from intact raw edible crustacean meat, recovering said raw intact crustacean meat and discarding said shell.

5. The method as claimed in any one of claims 1 to 4, wherein said crustacean is *Homaridae* lobster, of Spiny lobster or crab, or *Lithodes maja,* or *Neolithodes grimaldii,* or *Cancer pagurus* or *Cancer borealis.*

6. The method as claimed in claim 5 for removing meat from Spiny lobster which comprises:
a) initiating the detachment of an intact shell of said Spiny lobster from intact raw edible Spiny lobster meat by the step of subjecting said Spiny lobster to at least one freeze-thaw cycle, wherein said thawing is accomplished at a temperature range of 1°C to 10°C in cold water or in a cold dilute solution of brine; and
b) manually separating intact shell of said Spiny lobster from whole, intact Spiny lobster meat within said shell, recovering said whole, intact Spiny lobster meat, and discarding said shell.

7. The method as claimed in claim 5 for removing meat from crab, comprising:
a) initiating the detachment of an intact shell of said crab from intact raw edible meat by the step of subjecting said crab to at least one freeze-thaw cycle wherein said thawing is accomplished at a temperature range of 1°C to 10°C with cold water or with a cold dilute solution of brine; and
b) manual separating intact shell of said crab from whole, intact crab meat within said shell, and recovering said whole, intact meat, while discarding said shell.

8. The method as claimed in claim 1 or 3, including the step of vacuum aspiration of the so-treated detached crustacean meat fraction under 51800 N/m² to 86330 N/m².

## Patentansprüche

1. Verfahren zum Trennen von rohem essbaren Krustentierfleisch von der intakten Schale eines hartschaligen Krustentiers, bei welchem das Fleisch sehr stark an der Schale haftet, wobei das Verfahren umfasst:
a) Einleiten des Ablösens des rohen essbaren Krustentierfleisches von der intakten Schale durch den Schritt des Unterziehens der intakten Schale zumindest einem Gefrier-Auftau-Zyklus, wobei das Auftauen in einem Temperaturbereich von 1°C bis 10°C in kaltem Wasser oder einer kalten wässrigen Salzlösung bewerkstelligt wird, und
b) Trennen der intakten Schale von dem abgelösten rohen essbaren Krustentierfleisch und Gewinnen des rohen essbaren Krustentierfleisches durch den Schritt des Unterziehens der so behandelten intakten Schale einem Vakuumansaugen, um das rohe essbare Fleisch zu entfernen und zu gewinnen.

2. Verfahren zum Trennen von rohem essbaren Krustentierfleisch von der intakten Schale eines hartschaligen Krustentiers, bei welchem das Fleisch sehr stark an der Schale haftet, wobei das Verfahren umfasst:
a) Einleiten des Ablösens des rohen essbaren Krustentierfleisches von der intakten Schale durch den Schritt des Unterziehens der intakten Schale zumindest einem Gefrier-Auftau-Zyklus, wobei das Auftauen in einem Temperaturbereich von 1°C bis 10°C in kaltem Wasser oder einer kalten wässrigen Salzlösung bewerkstelligt wird, und
b) Trennen der intakten Schale von dem abgelösten rohen essbaren Krustentierfleisch und Gewinnen des rohren essbaren Krustentierfleisches durch den Schritt des manuellen Entfernens der intakten Schale von dem intakten rohen essbaren Krustentierfleisch, Gewinnens des rohen intakten Krustentierfleisches und Verwerfens der Schale.

3. Verfahren zum Trennen rohen essbaren Krustentierfleisches von der intakten Schale eines hartschaligen Krustentiers, in welchem das Fleisch sehr stark an der Schale haftet, wobei das Verfahren umfasst:
a) Einleiten des Ablösens des rohen essbaren Krustentierfleisches von der intakten Schale durch den Schritt des Unterziehens der intakten Schale der Einwirkung eines tiefgekühlten Eis/Salzgemisches bei einer maximal tiefen Temperatur der eutektischen Temperatur, und
b) Trennen der intakten Schale von dem abgelösten rohen essbaren Krustentierfleisch und Gewinnen des rohen essbaren Krustentierfleisches durch den Schritt des Unterziehens der so behandelten intakten Schale einem Vakuumansaugen, um das rohe essbare Fleisch zu entfernen und zu gewinnen.

4. Verfahren zum Trennen rohen essbaren Krustentierfleisches von der intakten Schale eines hartschaligen Krustentiers, in welchem das Fleisch sehr stark an der Schale haftet, wobei das Verfahren umfasst:
a) Einleiten des Ablösens des rohen essbaren Krustentierfleisches von der intakten Schale durch den Schritt des Unterziehens der intakten Schale der Einwirkung eines tiefgekühlten Eis/Salzgemisches bei einer maximal tiefen Temperatur der eutektischen Temperatur, und
b) Trennen der intakten Schale von dem abgelösten rohen essbaren Krustentierfleisch und Gewinnen des rohren essbaren Krustentierfleisches durch den Schritt des manuellen Entfernens der intakten Schale von dem intakten rohen essbaren Krustentierfleisch, Gewinnens des rohen intakten Krustentierfleisches und Verwerfens der Schale.

5. Verfahren nach einem der Ansprüche 1-4, wobei das Krustentier Homaridae-Hummer, Languste oder Krebs bzw. Krabbe, oder *Lithodes maja,* oder *Neolithodes grimaldii,* oder *Cancer pagurus* oder *Cancer borealis* ist.

6. Verfahren nach Anspruch 5 zum Entfernen von Fleisch aus einer Languste, welches umfasst:
a) Einleiten des Ablösens einer intakten Schale der Languste von intaktem rohen essbaren Langustenfleisch durch den Schritt des Unterziehens der Languste zumindest einem Gefrier-Auftau-Zyklus, wobei das Auftauen in einem Temperaturbereich von 1°C bis 10°C in kaltem Wasser oder einer kalten wässrigen Salzlösung bewerkstelligt wird, und
b) manuelles Trennen der intakten Schale der Languste vom ganzen, intakten Langustenfleisch in der Schale, Gewinnen des ganzen, intakten Langustenfleisches und Verwerfen der Schale.

7. Verfahren nach Anspruch 5 zum Entfernen von Fleisch aus einem Krebs bzw. einer Krabbe, umfassend:
a) Einleiten des Ablösens einer intakten Schale des Krebses von intaktem rohen essbaren Fleisch durch den Schritt des Unterziehens des Krebses zumindest einem Gefrier-Auftau-Zyklus, wobei das Auftauen in einem Temperaturbereich von 1°C bis 10°C mit kaltem Wasser oder mit einer kalten wässrigen Salzlösung bewerkstelligt wird, und
b) manuelles Trennen der intakten Schale des Krebses vom ganzen, intakten Krebsfleisch in der Schale, und Gewinnen des ganzen, intakten Fleisches, während die Schale verworfen wird.

8. Verfahren nach Anspruch 1 oder 3, umfassend den Schritt des Vakuumansaugens des so behandelten abgelösten Krustentierfleischanteils bei 51800 N/m² bis 86330 N/m².

## Revendications

1. Procédé pour séparer la chair de crustacé comestible crue de la carapace intacte d'un crustacé à carapace dure dans lequel ladite chair adhère très fortement à ladite carapace, ledit procédé comprenant :
a) l'initiation du détachement de ladite chair de crustacé comestible crue de ladite carapace intacte par l'étape consistant à soumettre ladite carapace intacte à au moins un cycle de congélation-décongélation, dans laquelle ladite décongélation est effectuée à une température comprise entre 1 °C et 10 °C dans l'eau froide ou dans une solution diluée froide d'eau salée ; et
b) la séparation de ladite carapace intacte de ladite chair de crustacé comestible crue détachée et la récupération de ladite chair de crustacé comestible crue par l'étape consistant à soumettre la carapace intacte ainsi traitée à une aspiration sous vide afin de retirer et de récupérer ladite chair comestible crue.

2. Procédé pour séparer la chair de crustacé comestible crue de la carapace intacte d'un crustacé à carapace dure dans lequel ladite chair adhère très fortement à ladite carapace, ledit procédé comprenant :
a) l'initiation du détachement de ladite chair de crustacé comestible crue de ladite carapace intacte par l'étape consistant à soumettre ladite carapace intacte à au moins un cycle de congélation-décongélation, dans laquelle ladite décongélation est effectuée à une température comprise entre 1 °C et 10°C dans l'eau froide ou dans une solution froide de saumure diluée ; et
b) la séparation de ladite carapace intacte de ladite chair de crustacé comestible crue détachée et la récupération de ladite chair de crustacé comestible crue par l'étape consistant à retirer manuellement la carapace intacte de la chair de crustacé comestible crue intacte, à récupérer ladite chair de crustacé intact crue et à éliminer ladite carapace.

3. Procédé pour séparer la chair de crustacé comestible crue de la carapace intacte d'un crustacé à carapace dure dans lequel ladite chair adhère très fortement à ladite carapace, ledit procédé comprenant :
a) l'initiation du détachement de ladite chair de crustacé comestible crue de ladite carapace intacte par l'étape consistant à soumettre ladite carapace intacte à l'action d'un mélange glace/sel superréfrigéré à la température la plus faible de la température eutectique ; et
b) la séparation de ladite carapace intacte de ladite chair de crustacé comestible crue et la récupération de ladite chair de crustacé comestible crue par l'étape consistant à soumettre la carapace intacte ainsi traitée à une aspiration sous vide pour retirer et récupérer ladite chair comestible crue.

4. Procédé pour séparer la chair de crustacé comestible crue de la carapace intacte d'un crustacé à carapace dure dans lequel ladite chair adhère très fortement à ladite carapace, ledit procédé comprenant :
a) l'initiation du détachement de ladite chair de crustacé comestible crue de ladite carapace intacte par l'étape consistant à soumettre ladite carapace intacte à l'action d'un mélange glace/sel superréfrigéré à la température la plus faible de la température eutectique ; et
b) la séparation de ladite carapace intacte de ladite chair de crustacé comestible crue et la récupération de ladite chair de crustacé comestible crue par l'étape consistant à retirer manuellement la carapace intacte de la chair de crustacé comestible crue intacte, à récupérer ladite chair de crustacé intact crue et à éliminer ladite carapace.

5. Procédé selon l'une quelconque des revendications 1 à 4, dans lequel ledit crustacé est un homard de la famille des *Homaridae,* ou une langouste ou un crabe, ou *Lithodes maja,* ou *Neolithodes grimaldii,* ou *Cancer pagurus* ou *Cancer borealis.*

6. Procédé selon la revendication 5 pour retirer la chair de langouste qui comprend :
a) l'initiation du détachement d'une carapace intacte de ladite langouste de la chair de langouste comestible crue intacte par l'étape consistant à soumettre ladite langouste à au moins un cycle de congélation-décongélation, dans laquelle ladite décongélation est effectuée à une température comprise entre 1 °C et 10 °C dans l'eau froide ou dans une solution froide de saumure diluée ; et
b) la séparation manuelle de la carapace intacte de ladite langouste de la chair de langouste intacte complète dans ladite carapace, la récupération de ladite chair de langouste intacte complète, et l'élimination de ladite carapace.

7. Procédé selon la revendication 5 pour retirer la chair de crabe, comprenant :
a) l'initiation du détachement d'une carapace intacte dudit crabe de la chair comestible crue intacte par l'étape consistant à soumettre ledit crabe à au moins un cycle de congélation-décongélation dans laquelle ladite décongélation est effectuée à une température comprise entre 1 °C et 10 °C dans l'eau froide ou dans une solution froide de saumure diluée ; et
b) la séparation manuelle de la carapace intacte dudit crabe de la chair du crabe intacte complète à l'intérieur de ladite carapace, et la récupération de ladite chair intacte complète, tout en éliminant ladite carapace.

8. Procédé selon la revendication 1 ou 3, comprenant l'étape d'aspiration sous vide de la fraction de chair de crustacé détachée ainsi traitée sous 51 800 N/m² à 86 330 N/m².
